# EUROPEAN PATENT APPLICATION

(11) **EP 4 835 965 A1**
(43) Date of publication of application: **04.11.2026**
(21) Application number: 26156565.9
(22) Date of filing: 05.02.2026
(51) Int. Cl.: H01M 4/02, H01M 4/04, H01M 10/04, H01M 10/0565, H01M 10/0583, H01M 50/474, H01M 50/486

(54) **BATTERY COMPRISING PRESSURIZATION STRUCTURE**

(30) Priority: 20.08.2025 KR 20250115773; 12.09.2025 KR 20250130662; 12.09.2025 KR 20250130663
(71) Applicant: Korea Advanced Institute of Science and Technology, Daejeon 34141 (KR)
(72) Inventor: KIM, Seong Su, Daejeon 34141 (KR); LIM, Su Hyun, Daejeon 34141 (KR); LEE, Ha Eun, Daejeon 34141 (KR); KIM, Samuel, Daejeon 34141 (KR); LEE, Jun Ho, Daejeon 34141 (KR)
(74) Representative: Isarpatent

(57) **Abstract**

A battery including a pressurization structure according to the present invention may include a structural pressurization unit or an active pressurization unit.

In this case, the battery including the structural pressurization unit may include a core including a positive electrode, a negative electrode, and an electrolyte part electrically connecting the positive electrode and the negative electrode, and a structural pressurization unit configured to generate a pressurization force on the core by a mechanical support force.

The battery including the active pressurization unit may include a core including a positive electrode, a negative electrode, and an electrolyte part electrically connecting the positive electrode and the negative electrode, an expansion detection unit configured to detect an expansion state of the core, and an active pressurization unit configured to provide a pressurization force to the core by changing a characteristic thereof according to a control signal generated based on a detection signal of the expansion detection unit.

## Description

### BACKGROUND

### 1. Field of the Invention

The present invention relates to a battery, and more specifically, to a battery including a pressurizing structure that provides a pressurization force to a core by a mechanical support force or active control, thereby improving performance and lifespan, and a manufacturing method and control method thereof.

### 2. Discussion of Related Art

In modern society, batteries are widely utilized as energy storage devices in everything from portable electronic devices to electric vehicles and the aerospace field. In particular, with the recent development of mobile robotic systems such as walking robots, drones, and electric aircraft, the concept of a structural battery, which can not only perform a simple energy storage function but also simultaneously support structural loads, has attracted attention.

A structural battery is a composite system that departs from the conventional approach of independently designing a separate structure and battery, instead allowing the battery itself to simultaneously serve as a structural member that supports mechanical loads.

This approach provides the advantage of significantly reducing the overall weight of a system and maximizing volumetric efficiency. Early studies on structural batteries mainly focused on physically combining composite materials with electrochemical elements, and designs were primarily based on simple stacked structures.

For example, in conventional structural batteries, composite materials perform only mechanical functions and electrochemical elements perform only electrochemical functions, and thus the structural batteries lack advanced multifunctionality. This is the most significant difference from next-generation structural batteries in which all components simultaneously perform both mechanical and electrochemical functions.

However, such conventional structural battery technologies show several limitations. One of the most critical issues is volumetric expansion, i.e., a swelling phenomenon that occurs during charging and discharging processes of the battery.

In the case of lithium-ion batteries, due to volume changes in electrode active materials during charging and discharging cycles, an expansion of about 10 to 15% may occur, which is a major cause of simultaneous deterioration in both the mechanical properties and electrochemical performance of structural batteries.

Further, due to the nature of composite materials, delamination is likely to occur in stacked structures, and the volumetric expansion of the battery readily induces fracture of the composite materials, which may impair the mechanical stability of structural batteries.

Such a battery swelling phenomenon occurs through various mechanisms. During the intercalation/deintercalation of lithium ions, a lattice structure of the electrode active material changes, and the resulting volume changes accumulate, thereby causing overall expansion of the battery.

In particular, modern commercial lithium-ion batteries are being developed with the aim of advancing high-speed charging and discharging technologies, but as charging and discharging rates increase, the degradation of cells accelerates, thereby causing the degree of expansion to become more severe. During rapid charging and discharging, an imbalance between an ion transport rate and an electrode reaction rate may lead to localized stress concentration and non-uniform volume changes, which are major causes that impair the structural stability of batteries.

Further, in the case of lithium metal batteries, which are next-generation batteries, dendritic structures are likely to form during lithium deposition under high-speed charging and discharging, and such non-uniform morphological changes further accelerate the degradation of cells. The formation of dendrites causes localized pressure imbalance, complicates the expansion pattern of an electrolyte part, and involves dynamic changes that are difficult to cope with using conventional static expansion suppression methods.

Further, when lithium metal, which is regarded as a negative electrode material for next-generation batteries, is used as a negative electrode, battery expansion that is 40 to 50% higher than that of commercialized lithium-ion batteries occurs due to factors such as the occurrence of porous structures, the formation of a solid electrolyte interphase (SEI), non-uniform reactions, and the generation of inactive lithium (dead lithium) during battery operation.

Further, in the case of silicon-based negative electrode materials, which are another type of negative electrode material for next-generation batteries, it is known that volumetric expansion of up to about 300% may occur, making the problem even more severe. In addition, gas generation caused by electrolyte decomposition and thermal expansion due to elevated temperatures are also factors that affect battery expansion.

Conventional battery expansion control technologies have mostly employed external devices designed separately from a battery system. This approach significantly increases the weight and volume of the overall system, thereby offsetting much of the advantage of integrated design pursued by structural batteries. In addition, due to the use of separate and complicated devices, the reliability of the system is degraded and maintenance becomes difficult.

From a structural perspective, the most significant problem of conventional technologies is a separate design structure between the battery and the structure. Electrochemical functions and mechanical functions are independently optimized, and thus the interactions or synergistic effects between two functions are not fully exploited. In particular, the excellent mechanical properties of composite materials have not been directly applied to the battery system, and in most cases the composite materials are merely limited to functioning as an external housing.

As described above, in the development process of structural battery technologies, conventional structural batteries mainly adopted a design approach utilizing stacked composite materials, but this approach had fundamental structural limitations. Stacked structures are vulnerable to delamination due to their reliance on interlayer adhesion and are limited in implementing complex three-dimensional geometries, thereby significantly reducing freedom in geometric design.

In addition, even at the present stage of developing next-generation structural batteries, the design limitation of merely reproducing the form of fabricating each material into a plate shape and simply stacking the materials still persists. Such a planar stacking method fundamentally limits improvements in energy density and maximization of structural efficiency of batteries, and in particular, hinders the ability to meet the requirements of modern applications demanding curved surfaces or complex geometries.

From the perspective of control technology, conventional systems also have static and passive characteristics. The conventional systems cannot adapt in real time to the dynamic expansion characteristics of batteries or changes in operating environments, and operate only in a predefined and fixed manner. This limitation makes it difficult to achieve optimal performance in application fields such as walking robots that are exposed to various operating conditions and environmental changes.

In addition, despite the advancement of sensor technologies, conventional systems encounter difficulties in accurately detecting internal states of batteries in real time. In particular, precisely detecting and responding to local changes occurring within the complex three-dimensional structures of batteries remains a technical challenge. As a result, the current approach is limited to reacting after problems occur rather than proactively detecting expansion phenomena at an early stage and responding proactively.

Accordingly, methods for solving such various problems are urgently required.

### [Prior-Art Documents]

### [Patent Documents]

Korean Registered Patent No. 10-1449307

### SUMMARY OF THE INVENTION

The present invention has been devised to solve the above-mentioned conventional problems and is directed to providing an integrated battery system capable of simultaneously securing improved structural performance and electrochemical performance by providing a pressurization force to a core of a battery.

The present invention is also directed to implementing an intelligent pressurization control system capable of responding in real time to localized expansion characteristics of a battery, thereby improving the lifespan and reliability of the battery.

The present invention is also directed to achieving differentiated performance improvements tailored to characteristics of respective battery types through an intelligent pressurization control system.

Objectives of the present invention are not limited to the above-described objectives, and other objectives that are not described herein will be apparently understood by those skilled in the art from the following description.

To achieve the above object, a battery including a structural pressurization unit according to the present invention includes a core including a positive electrode, a negative electrode, and an electrolyte part electrically connecting the positive electrode and the negative electrode, and the structural pressurization unit configured to generate a pressurization force on the core by a mechanical support force.

In addition, the electrolyte part may include a solid electrolyte.

At this time, the solid electrolyte may include a shape memory polymer (SMP) having a shape memory property. In this case, a partition wall having a honeycomb shape may be applied to improve mechanical performance of the electrolyte part.

In addition, the core may further include a first inner skin configured to surround one side of the solid electrolyte, wherein a positive electrode active material may be cast to form the positive electrode, and a second inner skin disposed opposite to the first inner skin to surround the other side of the solid electrolyte, wherein a negative electrode active material may be cast to from the negative electrode.

Meanwhile, each of the first inner skin and the second inner skin may include one or more of carbon fiber-reinforced plastic (CFRP), glass fiber-reinforced plastic (GFRP), and metal composites.

In addition, each of the first inner skin and the second inner skin may be formed in a shape in which a cross section in a width direction is curved so as to deform in a direction that prevents separation from the solid electrolyte.

In addition, the core may further include a plurality of fixing pins configured to provide a fixing force in a thickness direction so as to prevent separation between the solid electrolyte, the first inner skin, and the second inner skin.

Further, the core may be processed into a predetermined repetitive bending shape to form a mounting space in which the structural pressurization unit is provided.

At this time, the structural pressurization unit may include a volume-expanding foam configured to provide a fixed pressurization force after expansion.

In addition, the volume-expanding foam may include a heat-resistant polymer foam, and may include, for example, one or more of a urethane foam, an epoxy foam, and a phenolic foam.

Meanwhile, the structural pressurization unit may include a shape memory material configured to provide a pressurization force to the core as a shape thereof changes in response to a temperature rise of the electrolyte part.

In addition, the shape memory material may be heat-treated such that an optimal pressurization force corresponding to each temperature section of the electrolyte part is pre-calculated and the shape memory material is deformable according to a change in temperature of the electrolyte part to adjust the pressurization force.

In addition, the structural pressurization unit may include an elastic body formed to have an elastic restoring force and configured to provide a reaction force by being compressively deformed due to expansion of the core.

In addition, the elastic body may include one or more of silicone, rubber, and an elastic polymer.

At this time, the elastic body may include an elastic module configured to provide a reaction force through mechanical deformation upon compression.

In addition, the elastic module may include one or more of a spring, a bellows, and a diaphragm.

Meanwhile, the battery may further include a rigidity reinforcing member provided to surround outer sides of the core and the structural pressurization unit.

In addition, the rigidity reinforcing member may include one or more of carbon fiber-reinforced plastic (CFRP), glass fiber-reinforced plastic (GFRP), and metal composites.

In addition, the rigidity reinforcing member may include a first outer skin disposed to surround one side of the core and the structural pressurization unit, and a second outer skin disposed opposite to the first outer skin to surround the other side of the core and the structural pressurization unit.

In addition, the first outer skin and the second outer skin may be stacked in a thickness direction of the electrolyte part.

At this time, the first outer skin and the second outer skin may be stacked in a width direction of the electrolyte part.

To achieve the above object, a method of manufacturing a battery including a structural pressurization unit according to the present invention includes an operation (a1) of fabricating a core by electrically connecting a positive electrode and a negative electrode to an electrolyte part, and an operation (a2) of installing the structural pressurization unit configured to generate a pressurization force on the core by a mechanical support force so as to be in contact with the core.

Meanwhile, the operation (a1) may include an operation (a1-1) of forming a solid electrolyte as the electrolyte part.

In addition, in the operation (a1-1), a shape memory polymer (SMP) having a shape memory property may be incorporated into the solid electrolyte.

In addition, the operation (a1) may further include an operation (a1-2) of casting a positive electrode active material onto a first inner skin, an operation (a1-3) of casting a negative electrode active material onto a second inner skin, an operation (a1-4) of installing the first inner skin to surround one side of the solid electrolyte, and an operation (a1-5) of installing the second inner skin to surround the other side of the solid electrolyte.

In addition, in the operation (a1-4), the first inner skin may be formed and installed in a shape in which a cross section in a width direction is curved so as to deform in a direction that prevents separation from the solid electrolyte, and, in the operation (a1-5), the second inner skin may be formed and installed in a shape in which a cross section in the width direction is curved so as to deform in a direction that prevents separation from the solid electrolyte.

At this time, the operation (a1) may further include an operation (a1-6) of installing a plurality of fixing pins configured to provide a fixing force in a thickness direction so as to prevent separation between the solid electrolyte, the first inner skin, and the second inner skin.

In addition, in the operation (a1), the core may be formed in a semi-cured state.

Meanwhile, between the operation (a1) and the operation (a2), an operation (a1.1) of forming the core into a predetermined repetitive bending shape to form a mounting space in which the structural pressurization unit is provided may be performed.

In addition, in the operation (a1.1), the core may be pressurized by a roller unit having a processed pattern formed on an outer surface thereof to form the predetermined repetitive bending shape.

In addition, after the operation (a1.1), an operation (a1.2) of post-curing the core may be performed.

In addition, in the operation (a2), a volume-expanding foam configured to provide a fixed pressurization force after expansion may be installed as the structural pressurization unit.

At this time, the volume-expanding foam may include one or more of a urethane foam, an epoxy foam, and a phenolic foam.

In addition, in the operation (a2), a shape memory material configured to change a shape thereof in response to a change in temperature of the electrolyte part may be installed as the structural pressurization unit.

Meanwhile, the operation (a2) may include an operation (a2-1) of heat-treating the shape memory material to change the shape thereof in response to the change in temperature of the electrolyte part, and an operation (a2-2) of installing the heat-treated shape memory material in the core.

In addition, in the operation (a2), an elastic body formed to have an elastic restoring force and configured to provide a reaction force by being compressively deformed due to expansion of the core may be installed as the structural pressurization unit.

In addition, the elastic body may include one or more of silicone, rubber, and an elastic polymer.

In addition, the elastic body may include an elastic module configured to provide a reaction force through mechanical deformation upon compression.

At this time, the elastic module may include one or more of a spring, a bellows, and a diaphragm.

In addition, the method may further include an operation (a3) of installing a rigidity reinforcing member on outer sides of the core and the structural pressurization unit.

Meanwhile, the rigidity reinforcing member may include one or more of carbon fiber-reinforced plastic (CFRP), glass fiber-reinforced plastic (GFRP), and metal composites.

In addition, the operation (a3) may include an operation (a3-1) of disposing a first outer skin on one side of the core and the structural pressurization unit, and an operation (a3-2) of disposing a second outer skin on the other side of the core and the structural pressurization unit so as to be opposite to the first outer skin.

In addition, in the operation (a3), the first outer skin and the second outer skin may be stacked in a thickness direction of the electrolyte part.

In addition, in the operation (a3), the first outer skin and the second outer skin may be stacked in a width direction of the electrolyte part.

To achieve the above object, a battery including an active pressurization unit according to the present invention includes a core including a positive electrode, a negative electrode, and an electrolyte part electrically connecting the positive electrode and the negative electrode, an expansion detection unit configured to detect an expansion state of the core, and the active pressurization unit configured to provide a pressurization force to the core by changing a characteristic thereof according to a control signal generated based on a detection signal of the expansion detection unit.

In addition, the expansion detection unit may include a strain sensor configured to detect deformation caused by expansion of the core.

Meanwhile, the strain sensor may be a fiber-type sensor configured to measure a degree of the expansion of the core in real time through a resistance change generated upon deformation of the electrolyte part.

In addition, the expansion detection unit may include a temperature sensor configured to measure a temperature of the electrolyte part.

In addition, the expansion detection unit may be disposed in a distributed manner at a plurality of positions to detect expansion states of the respective portions of the electrolyte part.

In addition, the electrolyte part may include a solid electrolyte.

At this time, the solid electrolyte may include a shape memory polymer (SMP) having a shape memory property.

In addition, the core may further include a first inner skin configured to surround one side of the solid electrolyte, wherein a positive electrode active material may be cast to form the positive electrode, and a second inner skin disposed opposite to the first inner skin to surround the other side of the solid electrolyte, wherein a negative electrode active material may be cast to from the negative electrode.

Meanwhile, each of the first inner skin and the second inner skin may include one or more of carbon fiber-reinforced plastic (CFRP), glass fiber-reinforced plastic (GFRP), and metal composites.

In addition, each of the first inner skin and the second inner skin may be formed in a shape in which a cross section in a width direction is curved so as to deform in a direction that prevents separation from the solid electrolyte.

In addition, the core may further include a plurality of fixing pins configured to provide a fixing force in a thickness direction so as to prevent separation between the solid electrolyte, the first inner skin, and the second inner skin.

Further, the core may be processed into a predetermined repetitive bending shape to form a mounting space in which the active pressurization unit is provided.

At this time, the active pressurization unit may include a shape memory material configured to provide a pressurization force to the core as a shape thereof changes in response to a temperature rise.

In addition, the active pressurization unit may further include a heat generation unit embedded in the shape memory material and configured to provide thermal energy for deformation of the shape memory material in response to the control signal.

Meanwhile, the heat generation unit may be formed as a conductive wire configured to convert electrical energy into the thermal energy.

In addition, the active pressurization unit may include an elastic body formed to have an elastic restoring force and configured to provide a reaction force in response to the control signal by being compressively deformed due to expansion of the core.

In addition, the elastic body may include one or more of silicone, rubber, and an elastic polymer.

In addition, the elastic body may include an elastic module configured to provide a reaction force through mechanical deformation upon compression.

At this time, the elastic module may include one or more of a spring, a bellows, and a diaphragm.

In addition, the battery may further include a rigidity reinforcing member provided to surround outer sides of the core and the active pressurization unit.

Meanwhile, the rigidity reinforcing member may include one or more of carbon fiber-reinforced plastic (CFRP), glass fiber-reinforced plastic (GFRP), and metal composites.

In addition, the rigidity reinforcing member may include a first outer skin disposed to surround one side of the core and the active pressurization unit, and a second outer skin disposed opposite to the first outer skin to surround the other side of the core and the active pressurization unit.

In addition, the first outer skin and the second outer skin may be stacked in a thickness direction of the electrolyte part.

In addition, the first outer skin and the second outer skin may be stacked in a width direction of the electrolyte part.

At this time, the battery may further include a pressurization control unit configured to process the detection signal of the expansion detection unit to generate the control signal.

In addition, the pressurization control unit may be formed to be operatively connected to a battery management system (BMS).

To achieve the above object, a method of manufacturing a battery including a structural pressurization unit according to the present invention includes an operation (b1) of fabricating a core by electrically connecting a positive electrode and a negative electrode to an electrolyte part, an operation (b2) of installing an expansion detection unit configured to detect an expansion state of the core, an operation (b3) of installing an active pressurization unit whose characteristics are changed according to a control signal generated based on a detection signal of the expansion detection unit to be in contact with the core, and an operation (b4) of electrically connecting the expansion detection unit and the active pressurization unit.

In addition, the operation (b1) may include an operation (b1-1) of forming a solid electrolyte as the electrolyte part.

In addition, in the operation (b1-1), a shape memory polymer (SMP) having a shape memory property may be incorporated into the solid electrolyte.

In addition, the operation (b1) may further include an operation (b1-2) of casting a positive electrode active material onto a first inner skin, an operation (b1-3) of casting a negative electrode active material onto a second inner skin, an operation (b1-4) of installing the first inner skin to surround one side of the solid electrolyte, and an operation (b1-5) of installing the second inner skin to surround the other side of the solid electrolyte.

At this time, in the operation (b1-4), the first inner skin may be formed and installed in a shape in which a cross section in a width direction is curved so as to deform in a direction that prevents separation from the solid electrolyte, and, in the operation (b1-5), the second inner skin may be formed and installed in a shape in which a cross section in the width direction is curved so as to deform in a direction that prevents separation from the solid electrolyte.

In addition, the operation (b1) may further include an operation (b1-6) of installing a plurality of fixing pins configured to provide a fixing force in a thickness direction so as to prevent separation between the solid electrolyte, the first inner skin, and the second inner skin.

Meanwhile, in the operation (b1), the core may be formed in a semi-cured state.

In addition, between the operation (b1) and the operation (b2), an operation (b1.1) of forming the core into a predetermined repetitive bending shape to form a mounting space in which the active pressurization unit is provided may be performed.

In addition, in the operation (b1.1), the core may be pressurized by a roller unit having a processed pattern formed on an outer surface thereof to form the predetermined repetitive bending shape.

In addition, after the operation (b1.1), an operation (b1.2) of post-curing the core may be performed.

At this time, in the operation (b2), a strain sensor configured to detect deformation caused by expansion of the core may be installed as the expansion detection unit.

In addition, the strain sensor may be a fiber-type sensor configured to measure a degree of the expansion of the core in real time through a resistance change generated upon deformation of the electrolyte part.

Meanwhile, in the operation (b2), a temperature sensor configured to measure a temperature of the electrolyte part may be installed as the expansion detection unit.

In addition, in the operation (b2), the expansion detection unit may be disposed in a distributed manner at different positions of the electrolyte part.

In addition, in the operation (b3), a shape memory material formed to change a shape thereof in response to a change in temperature of the electrolyte part may be installed as the active pressurization unit.

In addition, in the operation (b3), a heat generation unit configured to provide thermal energy for deformation of the shape memory material in response to the control signal may be embedded in the shape memory material.

At this time, the heat generation unit may be formed as a conductive wire configured to convert electrical energy into the thermal energy.

In addition, in the operation (b3), an elastic body configured to provide a reaction force in response to the control signal by being compressively deformed due to expansion of the core may be installed as the active pressurization unit.

Meanwhile, the elastic body may include one or more of silicone, rubber, and an elastic polymer.

In addition, the elastic body may include an elastic module configured to provide a reaction force through mechanical deformation upon compression.

In addition, the elastic module may include one or more of a spring, a bellows, and a diaphragm.

In addition, the method may further include an operation (b5) of installing a rigidity reinforcing member on outer sides of the core and the active pressurization unit.

At this time, the rigidity reinforcing member may include one or more of carbon fiber-reinforced plastic (CFRP), glass fiber-reinforced plastic (GFRP), and metal composites.

In addition, the operation (b5) may include an operation (b5-1) of disposing a first outer skin on one side of the core and the active pressurization unit, and an operation (b5-2) of disposing a second outer skin on the other side of the core and the active pressurization unit so as to be opposite to the first outer skin.

Meanwhile, in the operation (b5), the first outer skin and the second outer skin may be stacked in a thickness direction of the electrolyte part.

In addition, in the operation (b5), the first outer skin and the second outer skin may be stacked in a width direction of the electrolyte part.

In addition, the method may further include an operation (b6) of electrically connecting a pressurization control unit which processes the detection signal of the expansion detection unit to generate the control signal to the expansion detection unit and the active pressurization unit.

In addition, the method may further include an operation (b7) of operatively connecting the pressurization control unit to a battery management system (BMS).

To achieve the above object, a control method of a battery including an active pressurization unit includes an operation (c1) of detecting an expansion state of the core through the expansion detection unit, an operation (c2) of generating a control signal based on a detected expansion state, and an operation (c3) of transmitting the control signal to the active pressurization unit to change a characteristic of the active pressurization unit and provide a pressurization force to the core, wherein the battery includes a core having a positive electrode, a negative electrode, and an electrolyte part electrically connecting the positive electrode and the negative electrode, the expansion detection unit configured to detect the expansion state of the core, and an active pressurization unit configured to provide a pressurization force to the core by changing a characteristic thereof according to the control signal generated based on the detection signal of the expansion detection unit.

In addition, the expansion detection unit may be a strain sensor configured to detect deformation caused by expansion of the core, and, in the operation (c1), the strain sensor may measure a resistance change to calculate a degree of the expansion of the core in real time.

Meanwhile, the expansion detection unit may be a temperature sensor configured to measure a temperature of the electrolyte part, and, in the operation (c1), a change in the temperature of the temperature sensor may be measured to calculate a degree of expansion of the core in real time.

In addition, the expansion detection unit may be disposed in a distributed manner to correspond to a plurality of positions of the electrolyte part, and, in the operation (c1), degrees of expansion of the respective portions of the electrolyte part may be calculated individually through a plurality of expansion detection units.

In addition, in the operation (c2), the control signal may be generated when the detected expansion state of the core exceeds a predetermined threshold.

In addition, in the operation (c2), an intensity of the control signal may be adjusted in proportion to a degree of expansion of the core.

At this time, the active pressurization unit may be a shape memory material formed to change a shape thereof in response to a change in temperature of the electrolyte part, the shape memory material having a heat generation unit embedded therein to provide thermal energy according to the control signal, and, in the operation (c3), the control signal may be transmitted to the heat generation unit embedded in the shape memory material to provide the thermal energy to the shape memory material.

In addition, the active pressurization unit may be an elastic body formed to provide a reaction force in response to the control signal by being compressively deformed due to expansion of the core, and, in the operation (c3), the control signal may be transmitted to the elastic body to generate the reaction force in the elastic body.

Meanwhile, the operation (c2) and the operation (c3) may be performed by a pressurization control unit configured to process the detection signal of the expansion detection unit to generate the control signal.

In addition, in the operation (c2) and the operation (c3), the pressurization control unit may be operatively connected to a battery management system (BMS) to generate the control signal.

In addition, in the operation (c2), the pressurization control unit may receive one or more pieces of information among a temperature of the electrolyte part, a charging and discharging state, and a voltage from the battery management system and reflect the received information in the generation of the control signal.

### BRIEF DESCRIPTION OF THE DRAWINGS

The above and other objects, features, and advantages of the present invention will become more apparent to those of ordinary skill in the art by describing exemplary embodiments thereof in detail with reference to the accompanying drawings, in which:
FIG. 1 is a conceptual view illustrating a battery including a structural pressurization unit according to the present invention;
FIG. 2 is a conceptual view illustrating a battery including an active pressurization unit according to the present invention;
FIG. 3 is a diagram illustrating each operation of a method of manufacturing a battery including the structural pressurization unit according to the present invention;
FIG. 4 is a diagram illustrating each operation of a method of manufacturing a battery including the active pressurization unit according to the present invention;
FIG. 5 is a view illustrating a state of a battery including a structural pressurization unit according to a first embodiment of the present invention;
FIG. 6 is a diagram illustrating each operation of a method of manufacturing a battery including the structural pressurization unit according to the first embodiment of the present invention;
FIG. 7 is a diagram illustrating detailed operations of an operation (a1) in the method of manufacturing a battery including the structural pressurization unit according to the first embodiment of the present invention;
FIGS. 8 and 9 are views sequentially illustrating states of performing each process of the operation (a1) in the method of manufacturing a battery including the structural pressurization unit according to the first embodiment of the present invention;
FIG. 10 is a view additionally illustrating a method applicable to operations (a1-4) and (a1-5) in the method of manufacturing a battery including the structural pressurization unit according to the first embodiment of the present invention;
FIGS. 11 and 12 are views respectively illustrating a state of performing the operation (a1.1) and a state of a core formed thereby in the method of manufacturing a battery including the structural pressurization unit according to the first embodiment of the present invention;
FIG. 13 is a view illustrating a state of performing the process of an operation (a2) in the method of manufacturing a battery including the structural pressurization unit according to the first embodiment of the present invention;
FIG. 14 is a diagram illustrating detailed operations of an operation (a3) in the method of manufacturing a battery including the structural pressurization unit according to the first embodiment of the present invention;
FIG. 15 is a view illustrating a state of performing the process of the operation (a3) in the method of manufacturing a battery including the structural pressurization unit according to the first embodiment of the present invention;
FIG. 16 is a view additionally illustrating a method applicable to the process of the operation (a3) in the method of manufacturing a battery including the structural pressurization unit according to the first embodiment of the present invention;
FIG. 17 is a view illustrating a state of a battery including an active pressurization unit according to a second embodiment of the present invention;
FIG. 18 is a diagram illustrating each operation of a method of manufacturing a battery including the active pressurization unit according to the second embodiment of the present invention;
FIG. 19 is a diagram illustrating detailed operations of an operation (b1) in the manufacturing method of a battery including the active pressurization unit according to the second embodiment of the present invention;
FIG. 20 is a view illustrating a state of performing the processes of an operation (b2) and an operation (b3) in the method of manufacturing a battery including the active pressurization unit according to the second embodiment of the present invention;
FIG. 21 is a diagram illustrating detailed operations of an operation (b5) in the manufacturing method of a battery including the active pressurization unit according to the second embodiment of the present invention;
FIG. 22 is a view illustrating a state of performing an operation (b6) in the method of manufacturing a battery including the active pressurization unit according to the second embodiment of the present invention;
FIG. 23 is a view additionally illustrating a method applicable to the process of the operation (b5) in the method of manufacturing a battery including the active pressurization unit according to the second embodiment of the present invention;
FIG. 24 is a diagram illustrating each operation of a control method for preventing expansion of the battery including the active pressurization unit according to the second embodiment of the present invention; and
FIG. 25 is a view illustrating a honeycomb structure applicable to a core of the battery according to all embodiments of the present invention.

### DETAILED DESCRIPTION OF EXEMPLARY EMBODIMENTS

In the present specification, when a component (or a region, a layer, a portion, or the like) is referred to as being "on," "connected to," or "coupled to" another component, the component may be directly on, connected, or coupled to the other element, or a third component may be disposed between them.

Like reference numerals refer to like components. In addition, in the drawings, the thicknesses, ratios, and dimensions of components are exaggerated for the effective explanation of the technical content.

The terms "and/or" includes any and all of one or more combinations which may be defined by associated components.

It will be understood that, although the terms first, second, and the like may be used herein to describe various components, these components should not be limited by these terms. These terms are only used to distinguish one component from another. For example, without departing from the scope of the present invention, a first component may be referred to as a second component, and similarly, a second component may be referred to as a first component. A singular expression includes a plural expression unless the context clearly indicates otherwise.

Further, terms such as "below," "under," "above," and "on" are used for describing a correlation between components illustrated in the drawings. These terms are relative concepts and are described based on a direction indicated in the drawings.

Unless defined differently, all the terms used herein (including technical terms and scientific terms) have the same meaning as commonly understood by those skilled in the art to which the present invention pertains. Further, it should be construed that terms defined in a dictionary generally used have meanings which coincide with meanings in a context of related art, and unless the terms are construed as ideal or excessively formal meanings, the terms are explicitly defined herein.

It will be further understood that the terms "comprise," "comprising," "include," and/or "including", when used in this specification, specify the presence of stated features, integers, steps, operations, elements, components and/or groups thereof but do not preclude the presence or addition of one or more other features, integers, steps, operations, elements, components and/or groups thereof.

Hereinafter, the embodiments of the present invention will be described in detail with reference to the drawings.

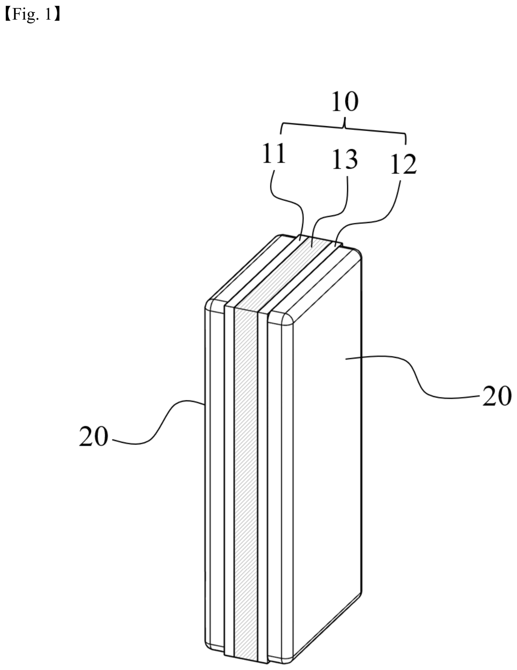

FIG. 1 is a conceptual view illustrating a battery including a structural pressurization unit 20 according to the present invention.

As shown in FIG. 1, the battery including the structural pressurization unit 20 according to the present invention may include a core 10 and the structural pressurization unit 20.

The core 10 is a key structure for storing and releasing electrochemical energy, and includes a positive electrode 11, a negative electrode 12, and an electrolyte part 13, and with such a configuration, the core can perform an energy conversion function through electrochemical reactions.

The positive electrode 11 serves as an electrode at which an oxidation reaction occurs in an electrochemical reaction, and in the case of lithium-ion batteries, may include a positive electrode active material such as lithium cobalt oxide, lithium iron phosphate, lithium manganese oxide, and lithium nickel cobalt manganese oxide, while, in the case of all-solid-state batteries, such a positive electrode active material may be in direct contact with a solid electrolyte to enable ion transport.

The negative electrode 12 serves as an electrode at which a reduction reaction occurs in an electrochemical reaction, and may include a negative electrode active material such as graphite, silicon, and lithium metal, and may function to store lithium ions during charging and to release lithium ions during discharging.

The electrolyte part 13 is a component that serves as an ion transport medium between the positive electrode 11 and the negative electrode 12, provides a transport path of lithium ions during charging and discharging, and may block direct movement of electrons by maintaining electrical insulation.

The electrolyte part 13 may include one or more of a liquid electrolyte, a gel electrolyte, and a solid electrolyte, and in the following embodiments to be described, descriptions will be provided focusing on the structure of an all-solid-state battery including a solid electrolyte.

In addition, the solid electrolyte may be classified into a ceramic-based electrolyte, a sulfide-based electrolyte, an oxide-based electrolyte, a polymer-based electrolyte, and the like, each of which may exhibit different ionic conductivity, mechanical strength, thermal stability, and electrochemical stability.

Further, the electrolyte part 13 may be deformed under the influence of expansion of the positive electrode 11 or the negative electrode 12, and, during charging and discharging, volume changes may occur in the negative electrode 12 and the positive electrode 11 due to temperature changes and ion migration, and such volume changes may cause performance degradation and shortened lifespan of the battery.

The structural pressurization unit 20 is a component that generates a pressurization force on the core 10 by a mechanical support force, and may provide a pressurization force in direct response to physical changes in the positive electrode 11, the negative electrode 12, and the electrolyte part 13 without external control signals or energy supply.

The structural pressurization unit 20 may function to suppress volume changes in the core 10 when the volume changes occur, thereby maintaining structural stability of the battery and preventing degradation of electrochemical performance.

In particular, the pressurization effect by the structural pressurization unit 20 may provide various performance and lifespan improvement effects depending on the type of battery.

For example, in the case of lithium-ion batteries, expansion caused by volume changes in active materials during charging and discharging may be suppressed through pressurization, thereby securing structural stability of the active materials, maintaining contact between the electrodes, preventing capacity reduction, and extending cycle life.

In the case of lithium metal batteries, a uniform pressurization force applied to a lithium metal negative electrode may suppress dendrite formation occurring during lithium deposition and control the morphology of lithium. Accordingly, Coulombic efficiency may be improved and the risk of short circuits may be reduced, thereby ensuring safety.

In the case of all-solid-state batteries, since interfacial contact between a solid electrolyte and electrodes is a key factor determining battery performance, pressurization may continuously maintain the interfacial contact, thereby minimizing interfacial resistance and enhancing ionic conductivity. This may directly contribute to maximizing electrochemical performance of all-solid-state batteries.

In addition, the structural pressurization unit 20 may be implemented in various forms, and may include volume-expanding foams, shape memory materials, elastic bodies, and the like, each of which may provide a pressurization force through different mechanisms.

The volume-expanding foams may include urethane foams, epoxy foams, phenolic foams, and the like, and may have a characteristic of maintaining a constant pressurization force by expanding after initial installation. Such volume-expanding foams may fill spaces around the electrolyte part 13 during expansion to form a uniform pressure distribution and may provide a reaction force corresponding to expansion of the core 10.

The shape memory materials may have a characteristic of changing their shapes in response to temperature changes, and may provide a pressurization force by automatically changing their shape as the temperature of the electrolyte part 13 increases. Such shape memory materials may include shape memory polymers (SMPs), shape memory alloys (SMAs), and the like, and appropriate pressurization forces corresponding to respective temperature ranges may be pre-calculated and programmed through heat treatment.

Alternatively, the shape memory materials may also be controlled by using various stimuli such as fiber-type heating elements included in a skin or battery material, ultrasound, or light.

The elastic bodies may include silicone, rubber, elastic polymers, and the like, and may provide a reaction force through elastic restoring force against compressive deformation.

In addition, the elastic bodies may also include elastic modules that provide a reaction force through mechanical deformation upon compression. Such elastic modules may generate an immediate reaction force through mechanical deformation when compressive force is applied due to expansion of the core, and may have a characteristic of being restored to their original shape when the compressive force is removed.

The elastic modules may be implemented in various forms, and may include one or more of springs, bellows, and diaphragms.

The springs may be implemented in forms such as coil springs, leaf springs, and torsion springs, and may exhibit linear or non-linear reaction force characteristics against compressive force.

The bellows may generate elastic deformation upon axial compression through their corrugated structure, and may provide a variable reaction force depending on the degree of compression.

The diaphragms are structures in the form of membranes that deform in response to pressure changes and may maintain a constant pressurization force through a restoring force.

However, the elastic module is not limited to such forms and may be implemented in various other forms.

In the above configuration, the structural pressurization unit 20 may operate as a passive system that provides a pressurization force by physically responding to expansion of the core 10, thereby preventing performance degradation of the battery and securing structural stability.

Further, the structural pressurization unit 20 may form a uniform pressure distribution at a contact surface with the electrolyte part 13, thereby preventing localized stress concentration and maintaining consistent performance even during repeated charging and discharging processes over a long period of time.

The structural pressurization unit 20 may provide effects of improving overall energy density of the battery, increasing mechanical rigidity, and enhancing thermal stability.

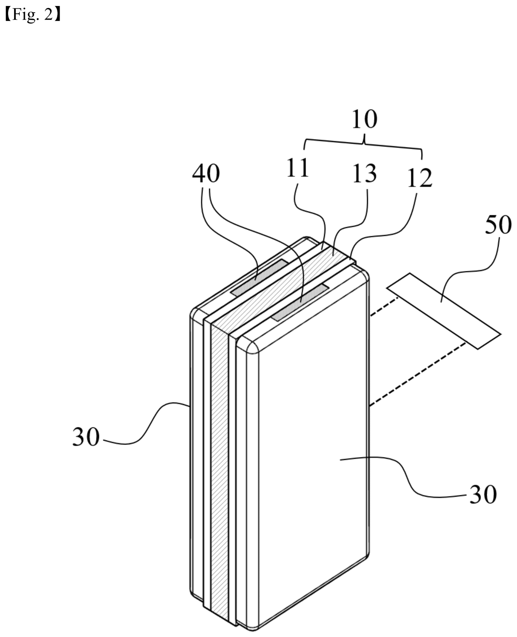

FIG. 2 is a conceptual view illustrating a battery including an active pressurization unit according to the present invention.

As shown in FIG. 2, in the present embodiment, the battery may include a core 10, an active pressurization unit 30, an expansion detection unit 40, and a control member 50.

The core 10, similar to that in FIG. 1, includes a positive electrode 11, a negative electrode 12, and an electrolyte part 13, and can perform a function of storing and releasing electrochemical energy, and the core 10 may exhibit ion transport and volume change characteristics during charging and discharging processes.

The expansion detection unit 40 is a sensor system that detects an expansion state of the core 10 in real time, and may function to quantitatively measure physical changes in the electrolyte part 13, convert the measured changes into electrical signals, and transmit the electrical signals to the control member 50.

The expansion detection unit 40 may be implemented based on various sensor technologies, and may include strain sensors, pressure sensors, temperature sensors, displacement sensors, and the like.

The strain sensors may be implemented as fiber-type sensors, and may calculate a degree of expansion in real time by measuring resistance changes according to deformation of the electrolyte part 13. Such fiber-type sensors have excellent flexibility and a thin structure, and thus may be easily embedded inside the battery and disposed in a distributed manner at various positions of the electrolyte part 13 to individually detect expansion states of the respective portions.

The pressure sensors directly measure pressure changes due to expansion of the core 10, and may be implemented as piezoresistive sensors, capacitive sensors, piezoelectric sensors, or the like.

The temperature sensors may be implemented as thermocouples, thermistors, infrared sensors, or the like and may estimate expansion states indirectly by measuring changes in temperature of the core 10.

The displacement sensors may measure thickness changes or surface displacement of the positive electrode 11, the negative electrode 12, and the electrolyte part 13, and may be implemented as optical sensors, eddy current sensors, laser sensors, or the like.

In addition, the expansion detection unit 40 may be configured by combining a plurality of sensors, thereby improving measurement accuracy and providing a backup function against sensor errors.

The active pressurization unit 30 is a component that provides a pressurization force to the core 10 by changing its characteristics in response to control signals generated based on detection signals from the expansion detection unit 40, actively reacts to external control, and may variably provide an appropriate level of pressurization force according to an expansion state of the core 10.

In addition, precise adjustment of pressurization force through such active control may enable optimized performance improvement tailored to characteristics of respective battery types.

Specifically, similar to the above-described structural pressurization unit 20, the active pressurization unit 30 may maximize stability of active materials in the case of lithium-ion batteries through adaptive pressurization control according to charging and discharging states, may preemptively suppress dendrite formation in the case of lithium metal batteries through real-time pressurization adjustment according to lithium deposition patterns, and may optimize interfacial contact in the case of all-solid-state batteries through dynamic pressurization control in response to interfacial impedance variations.

The active pressurization unit 30 may be implemented based on various active driving mechanisms, and may include shape memory materials, electroactive polymers, piezoelectric actuators, electromagnetic actuators, and the like.

In the case of the active pressurization unit 30 using a shape memory material, a shape change may be induced by receiving thermal energy from an embedded heat generation unit in response to control signals. The heat generation unit may be formed as a conductive wire that converts electrical energy into thermal energy, and may provide a required temperature to the shape memory material by utilizing the principle of Joule heating. In such a configuration, the control member 50 supplies an appropriate current to the conductive wire according to a degree of expansion detected by the expansion detection unit 40, and thermal energy generated thereby induces a shape change of the shape memory material to adjust the pressurization force.

In the case of the active pressurization unit 30 using an electroactive polymer, a polymer material that changes in size or shape by application of an electric field may be used, and may include dielectric elastomers, ion polymer-metal composites, conductive polymers, and the like. Such electroactive polymers may have fast response characteristics because deformation may occur immediately upon application of voltage, and may allow precise control of a deformation amount depending on the magnitude of an applied voltage.

In the case of the active pressurization unit 30 using a piezoelectric actuator, mechanical deformation may be induced by applying voltage to piezoelectric ceramics or piezoelectric polymers, and may have high precision and fast response characteristics.

In the case of the active pressurization unit 30 using an electromagnetic actuator, mechanical force may be generated by utilizing an interaction between a coil and a magnet, and a direction and a magnitude of the pressurization force may be controlled by adjusting a direction and a magnitude of current.

The control member 50 is a control system that processes detection signals received from the expansion detection unit 40 and generates control signals to be transmitted to the active pressurization unit 30, and may include microprocessors, digital signal processors, analog circuits, and the like. The control member 50 may analyze an expansion state of the core 10, control the active pressurization unit 30 to provide an optimal pressurization force, and apply various control algorithms to optimize performance of the system.

The control member 50 may apply control techniques such as proportional-integral-derivative (PID) control, fuzzy control, neural network control, and adaptive control, and may adjust control parameters in consideration of expansion characteristics of the core 10 and dynamic characteristics of the active pressurization unit 30.

In addition, the control member 50 may be operatively connected to a battery management system (BMS) to perform integrated control in consideration of overall state information of the battery, and may establish an optimal control strategy by synthesizing information such as temperature, voltage, current, and charging and discharging states.

Through such a configuration, the battery may actively suppress expansion in response to real-time changes in states of the positive electrode 11, the negative electrode 12, and the electrolyte part 13, thereby enabling maintenance of battery performance over a long period of time.

Since the active pressurization unit 30 may precisely adjust the pressurization force according to a degree of expansion of the core 10, cracks in the negative electrode 12 caused by excessive pressurization may be prevented while sufficient pressurization force is provided to maximize an expansion suppression effect.

In addition, due to characteristics of an active system, the active system may adaptively respond to various operating conditions and environmental variations, thereby contributing to the extension of battery lifespan and the improvement of performance.

Hereinafter, processes of manufacturing a battery including the structural pressurization unit 20 described with reference to FIG. 1 and a battery including the active pressurization unit 30 described with reference to FIG. 2 will be described.

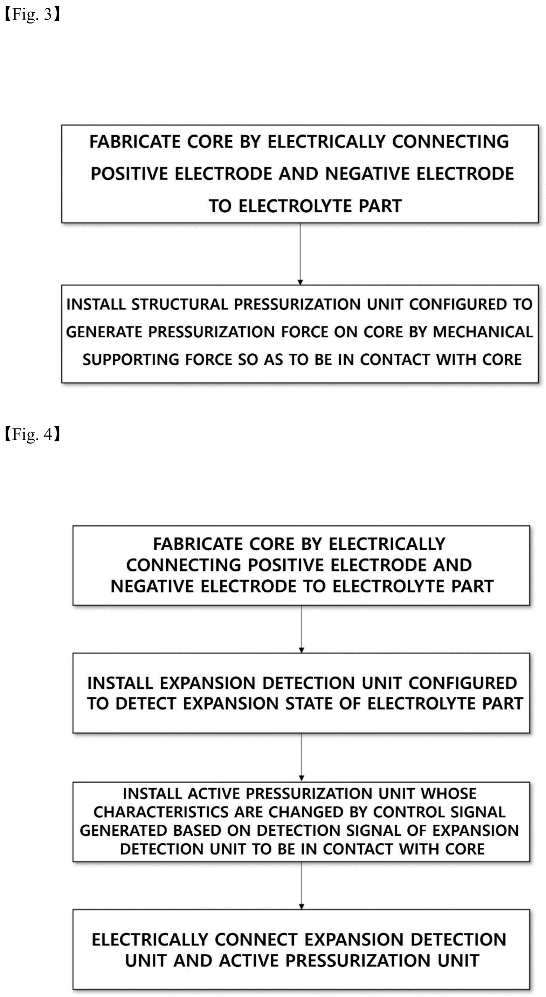

FIG. 3 is a diagram illustrating each operation of the method of manufacturing a battery including the structural pressurization unit 20 according to the present invention.

As shown in FIG. 3, the method of manufacturing a battery including the structural pressurization unit 20 according to the present invention may include a core fabrication operation and a structural pressurization unit installation operation.

In the core fabrication operation, a core 10, which is a basic structure capable of storing electrochemical energy, may be formed by electrically connecting a positive electrode 11, a negative electrode 12, and an electrolyte part 13.

In the process of fabricating the core 10, an appropriate arrangement and connection may be achieved so that the electrolyte part 13 functions as an ion transport medium between the positive electrode 11 and the negative electrode 12.

The core 10 may exhibit volume change characteristics according to temperature changes and ion migration occurring during charging and discharging processes, and such volume changes may directly affect structural stability and electrochemical performance of the battery.

In particular, in the case of all-solid-state batteries, interfacial contact resistance between a solid electrolyte and the electrodes may be an important factor determining battery performance, and thus it may be essential to prevent an interfacial separation phenomenon caused by expansion of the core 10.

Even in the case of batteries using liquid electrolytes, deformation of an exterior material or an increase of internal pressure caused by expansion of the core 10 may adversely affect the safety and lifespan of the batteries.

In the core fabrication operation, a solid electrolyte may be formed as the electrolyte part 13, and such a solid electrolyte may be classified into a ceramic-based electrolyte, a sulfide-based electrolyte, an oxide-based electrolyte, a polymer-based electrolyte, and the like.

Each solid electrolyte may exhibit different ionic conductivity, mechanical strength, thermal stability, and electrochemical stability, and an appropriate solid electrolyte may be selected depending on a purpose of use and requirements of the battery.

In addition, in the core fabrication operation, a shape memory polymer (SMP) having a shape memory property may be included in the solid electrolyte, whereby the electrolyte part 13 may have a smart electrolyte characteristic of automatically changing its shape in response to temperature changes.

In addition, the solid electrolyte including an SMP may also allow active adjustment of characteristics by external control. For example, heat generation devices such as heaters, resistance heaters, and Peltier elements may be disposed inside or near the electrolyte part 13 to actively induce shape changes of the shape memory polymer through direct temperature control. Such an active control method may be operatively connected to a BMS to optimize characteristics of the electrolyte part in real time according to charging and discharging states, external temperature, required performance, and the like, thereby realizing precise and predictable smart electrolyte control. In particular, during rapid charging or high-power discharging, preemptive temperature control through a heater may be used to adjust characteristics of the shape memory polymer in advance, thereby improving battery performance.

In the structural pressurization unit installation operation, the structural pressurization unit 20, which may generate a pressurization force on the core 10 by a mechanical support force, may be disposed in contact with the core 10.

The structural pressurization unit 20 may operate as a passive system that provides a pressurization force in direct response to physical changes in the electrolyte part 13 without external control signals or energy supply. The structural pressurization unit 20 may function to suppress volume changes occurring in the core 10, thereby maintaining structural stability of the battery and preventing degradation of electrochemical performance.

The structural pressurization unit 20 may be implemented in various forms and may include volume-expanding foams, shape memory materials, elastic bodies, and the like.

The volume-expanding foams may include urethane foams, epoxy foams, phenolic foams, and the like and may have a characteristic of maintaining a constant pressurization force by expanding after initial installation.

The shape memory materials may have a characteristic of changing their shape in response to temperature changes, and may provide a pressurization force by automatically changing their shape as the temperature of the electrolyte part 13 increases.

The elastic bodies may include silicone, rubber, elastic polymers, and the like, and may provide a reaction force through elastic restoring force against compressive deformation.

The battery manufactured through this manufacturing method may incorporate an automatic pressurization system that responds to expansion of the core 10, and thereby may maintain structural stability even during repeated charging and discharging processes over a long period of time.

In addition, the structural pressurization unit 20 may form a uniform pressure distribution at a contact surface with the electrolyte part 13 to prevent localized stress concentration, thereby enhancing overall mechanical rigidity and durability of the battery.

FIG. 4 is a diagram illustrating each operation of a method of manufacturing a battery including the active pressurization unit 30 according to the present invention.

As shown in FIG. 4, in the present embodiment, the method of manufacturing a battery including the active pressurization unit 30 may include a core fabrication operation, an expansion detection unit installation operation, an active pressurization unit installation operation, and an electrical connection operation.

In the core fabrication operation, similarly to FIG. 3, a core 10, which is a basic structure capable of storing electrochemical energy, may be formed by electrically connecting a positive electrode 11, a negative electrode 12, and an electrolyte part 13, and the core 10 may exhibit ion transport and volume change characteristics during charging and discharging processes.

In the expansion detection unit installation operation, an expansion detection unit 40, which is a sensor system capable of detecting an expansion state of the core 10 in real time, may be disposed inside or outside the battery.

The expansion detection unit 40 may be implemented based on various sensor technologies, and may include strain sensors, pressure sensors, temperature sensors, displacement sensors, and the like.

The strain sensors may be implemented as fiber-type sensors, and may calculate a degree of expansion in real time by measuring resistance changes according to deformation of the electrolyte part 13. Such fiber-type sensors have excellent flexibility and a thin structure, and thus may be easily embedded inside the battery and disposed in a distributed manner at various positions of the electrolyte part 13 to individually detect expansion states of the respective portions.

The temperature sensors may be implemented as thermocouples, thermistors, infrared sensors, or the like and may estimate expansion states indirectly by measuring changes in temperature of the core 10.

The expansion detection unit 40 may be disposed in a distributed manner at different positions of the electrolyte part 13, thereby enabling identification of expansion distribution of the entire electrolyte part 13 and precise detection of local expansion phenomena.

In addition, the expansion detection unit 40 may be configured by combining a plurality of sensors, thereby improving measurement accuracy and providing a backup function against sensor errors.

In the active pressurization unit installation operation, an active pressurization unit 30, which is capable of providing a pressurization force to the core 10 by changing its characteristics in response to a control signal generated based on detection signals from the expansion detection unit 40, may be disposed in contact with the core 10.

The active pressurization unit 30 may actively respond under external control and may variably provide an appropriate level of pressurization force according to an expansion state of the core 10.

In addition, the active pressurization unit 30 may be implemented based on various active driving mechanisms, and may include shape memory materials, electroactive polymers, piezoelectric actuators, electromagnetic actuators, and the like.

In the case of the active pressurization unit 30 using a shape memory material, a shape change may be induced by receiving thermal energy from an embedded heat generation unit in response to control signals.

The heat generation unit may be formed as a conductive wire that converts electrical energy into thermal energy, and may provide a required temperature to the shape memory material by utilizing the principle of Joule heating.

In the case of the active pressurization unit 30 using an electroactive polymer, a polymer material that changes in size or shape upon application of an electric field may be used, and a deformation amount and pressurization force may be precisely controlled by adjusting the magnitude and direction of an applied voltage.

In the electrical connection operation, the expansion detection unit 40 and the active pressurization unit 30 may be electrically connected to establish a system capable of transmitting detection signals and generating control signals.

Such an electrical connection may be made through a control member 50, and the control member 50 may process detection signals received from the expansion detection unit 40, generate control signals, and transmit the control signals to the active pressurization unit 30.

At this time, the control member 50 may include a microprocessor, a digital signal processor, an analog circuit, and the like, and may optimize system performance by applying various control algorithms.

In the present manufacturing method, a pressurization control unit that processes detection signals from the expansion detection unit 40 and generates control signals may be electrically connected to the expansion detection unit 40 and the active pressurization unit 30, and the pressurization control unit may be operatively connected to a BMS.

In addition, the battery manufactured through the present manufacturing method may incorporate an intelligent pressurization system capable of actively suppressing expansion in response to real-time changes in the state of the electrolyte part 13, thereby adaptively responding to various operating conditions and environmental variations.

Hereinafter, detailed embodiments of the battery including a structural pressurization unit, the battery including an active pressurization unit, and manufacturing methods thereof will be described in detail.

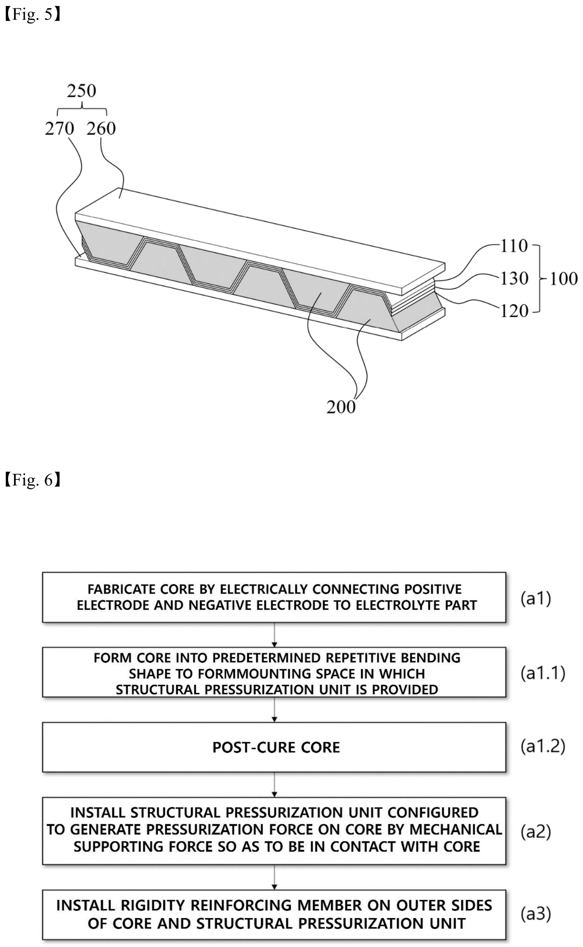

FIG. 5 is a view illustrating a state of a battery including a structural pressurization unit according to a first embodiment of the present invention.

As shown in FIG. 5, in the present embodiment, a battery including a structural pressurization unit 200 may include a core 100, a structural pressurization unit 200, and a rigidity reinforcing member 250.

The core 100 may include a first inner skin 110, a second inner skin 120, and an electrolyte part 130, and may serve as a key component of the battery performing a function of storing and releasing electrochemical energy.

The first inner skin 110 is disposed to surround one side of the electrolyte part 130, and may be formed as a positive electrode by casting a positive electrode active material thereonto.

The second inner skin 120 is disposed opposite to the first inner skin 110 to surround the other side of the electrolyte part 130, and may be formed as a negative electrode by casting a negative electrode active material thereonto.

The electrolyte part 130 serves as a medium electrically connecting the positive electrode and the negative electrode, and may provide an ion transport path during charging and discharging processes.

In the present embodiment, the electrolyte part 130 may include a solid electrolyte, and may provide improved safety and structural stability compared to a liquid electrolyte. In addition, the electrolyte part 130 may include an SMP having a shape memory property, and may thereby perform a smart electrolyte function of automatically changing its characteristics in response to temperature changes.

The structural pressurization unit 200 is a component that generates a pressurization force on the core 100 by a mechanical support force, and may operate as a passive system that provides a pressurization force in direct response to physical changes in the electrolyte part 130 without external control signals or energy supply.

The rigidity reinforcing member 250 is provided to surround outer sides of the core 100 and the structural pressurization unit 200, and may function to improve overall structural stability and mechanical rigidity of the battery.

The rigidity reinforcing member 250 may include carbon fiber-reinforced plastic (CFRP), glass fiber-reinforced plastic (GFRP), metal composites, and the like, each of which may exhibit mechanical properties and weight characteristics.

In the present embodiment, the rigidity reinforcing member 250 may include a first outer skin 260 and a second outer skin 270, wherein the first outer skin 260 is disposed to surround one side of the core 100 and the structural pressurization unit 200, and the second outer skin 270 is disposed opposite to the first outer skin 260 to surround the other side of the core 100 and the structural pressurization unit 200.

FIG. 6 is a diagram illustrating each operation of a method of manufacturing a battery including the structural pressurization unit according to the first embodiment of the present invention.

As shown in FIG. 6, in the present embodiment, the method of manufacturing a battery including the structural pressurization unit 200 may sequentially include an operation (a1), an operation (a1.1), an operation (a1.2), an operation (a2), and an operation (a3). Each operation has a specific function and purpose in the battery manufacturing process, and precise control and quality management may be performed for each operation.

The operation (a1) is an operation of fabricating a core 100 by electrically connecting a positive electrode and a negative electrode to an electrolyte part 130, and is a process of forming a basic structure of the battery.

In the operation (a1), a solid electrolyte may be formed as the electrolyte part 130, and a positive electrode active material and a negative electrode active material may be cast onto a first inner skin 110 and a second inner skin 120, respectively, and assembled with the solid electrolyte to constitute an electrochemically connected core 100.

In the operation (a1), the core 100 may be formed in a semi-cured state, thereby facilitating forming work in subsequent processes and improving the precision of a final shape.

The operation (a1.1) is an operation of forming the core 100 into a predetermined repetitive bending shape to form a mounting space 101 in which a structural pressurization unit 200 is provided, and is a forming process of implementing structural design of the battery.

In the operation (a1.1), the core 100 may be pressurized by a roller unit R having a processed pattern formed on an outer surface thereof to form the predetermined repetitive bending shape, and various types of bending structures may be implemented by adjusting the pattern design and pressing conditions of the roller unit R.

The operation (a1.2) is an operation of post-curing the core 100, and is a curing process for determining the final shape and mechanical properties of the formed core 100. Through the post-curing process, the core 100 may secure structural stability and prevent deformation in subsequent processes, and required mechanical properties can be achieved by optimizing curing conditions.

The operation (a2) is an operation of installing the structural pressurization unit 200 configured to generate a pressurization force on the core 100 by a mechanical support force so as to be in contact with the core 100, and is a process of implementing an expansion suppression function.

In the operation (a2), various types of structural pressurization units 200, such as volume-expanding foams, shape memory materials, and elastic bodies, may be disposed in the mounting space 101, and an optimal installation method according to the characteristics of each type may be applied.

The operation (a3) is an operation of installing a rigidity reinforcing member 250 on outer sides of the core 100 and the structural pressurization unit 200, and is a finishing process of securing overall structural completeness of the battery.

In the operation (a3), a first outer skin 260 and a second outer skin 270 may each be disposed, and an optimal configuration may be implemented in consideration of performance characteristics according to a stacking direction.

Through the present manufacturing method, the battery including the structural pressurization unit 200 incorporates an automatic pressurization system that responds to expansion of the core 100, thereby maintaining stable performance even during repeated charging and discharging processes over a long period of time.

In addition, systematic management of each manufacturing operation ensures high quality and consistency, and allows customized responses to requirements of various application fields.

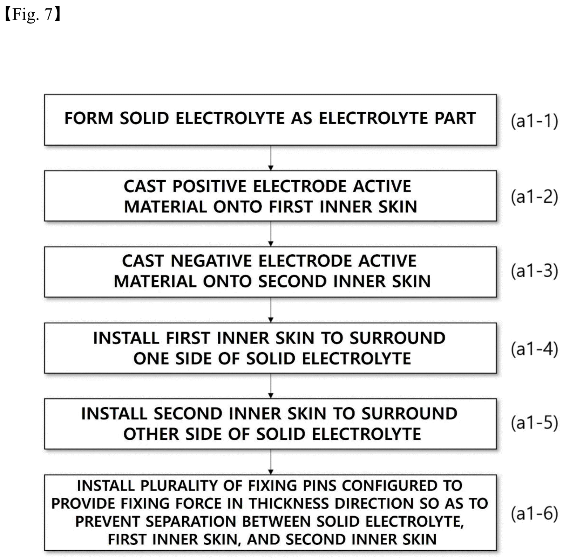

FIG. 7 is a diagram illustrating detailed operations of the operation (a1) in the method of manufacturing a battery including the structural pressurization unit 200 according to the first embodiment of the present invention.

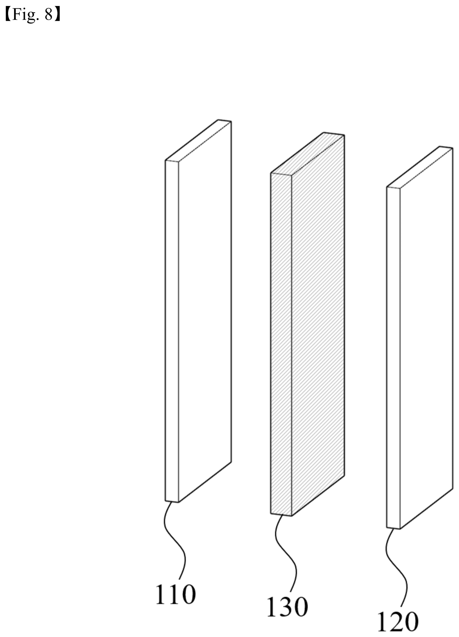

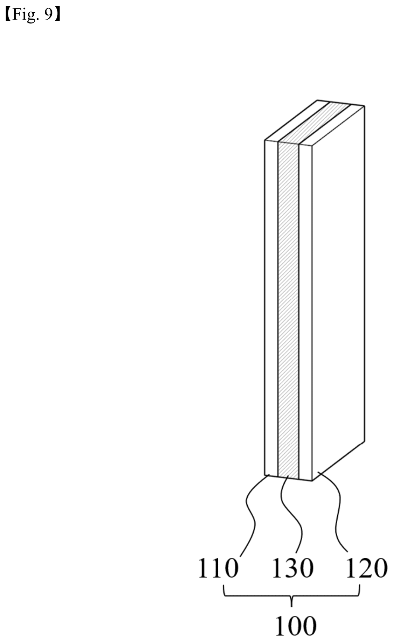

In addition, FIGS. 8 and 9 are views sequentially illustrating states of performing each process of the operation (a1) in the method of manufacturing a battery including the structural pressurization unit 200 according to the first embodiment of the present invention.

As shown in FIG. 7, in the present embodiment, the operation (a1) is an operation of fabricating the core 100 by electrically connecting the positive electrode and the negative electrode to the electrolyte part 130, and may include an operation (a1-1), an operation (a1-2), an operation (a1-3), an operation (a1-4), an operation (a1-5), and an operation (a1-6).

The operation (a1) is intended to simultaneously secure electrochemical performance and mechanical stability of the battery, and is a process of forming the core 100 structure by utilizing characteristics of an all-solid-state battery.

As shown in FIGS. 7 and 8, in the operation (a1-1), a solid electrolyte may be formed as the electrolyte part 130.

The solid electrolyte may provide improved safety and structural stability compared to conventional liquid electrolytes, and may be implemented in various forms such as a ceramic-based electrolyte, a sulfide-based electrolyte, an oxide-based electrolyte, and a polymer-based electrolyte.

The ceramic-based electrolyte may include Li₇La₃Zr₂O₁₂(LLZO), Li₁₊ₓAlₓTi₂₋ₓ(PO₄)₃(LATP), or the like, and such a ceramic-based electrolyte may exhibit high ionic conductivity and electrochemical stability.

The sulfide-based electrolyte may include Li₁₀GeP₂Si₂(LGPS), Li₆PS₅Cl, or the like, and may have a property of high ionic conductivity at room temperature. The oxide-based electrolyte may include Li₁₊ₓAlₓGe₂₋ₓ(PO₄)₃(LAGP) or the like, and may exhibit excellent chemical stability and stability in air.

The polymer-based electrolyte may include polyethylene oxide (PEO), polyacrylonitrile (PAN), or the like, and may have excellent processability and flexibility.

In addition, in the present embodiment, in the operation (a1-1), an SMP having a shape memory property may be incorporated in the solid electrolyte.

The SMP has a characteristic of changing its shape in response to temperature changes, and thus the electrolyte part 130 itself may perform a smart electrolyte function of automatically changing its characteristics according to temperature changes.

The SMP may be implemented in various forms such as a polyurethane-based SMP, an epoxy-based SMP, and a polystyrene-based SMP, and each of which may exhibit different transition temperatures and shape recovery characteristics.

Such an SMP may respond to temperature changes occurring during charging and discharging processes of the battery to simultaneously adjust mechanical properties and ionic conductivity of the electrolyte part 130, and may be utilized for expansion suppression and performance optimization of the battery. In addition, the ion conductivity of the shape memory polymer may be increased during charging to increase charging rates, and ion pathways may be blocked during thermal runaway.

In the operation (a1-2), a positive electrode active material may be cast onto the first inner skin 110.

The first inner skin 110 may include carbon fiber-reinforced plastic (CFRP), glass fiber-reinforced plastic (GFRP), metal composites, and the like, and such materials may exhibit excellent mechanical strength and electrical properties.

The CFRP may have a high strength-to-weight ratio and excellent electrical conductivity, and the GFRP may have low cost and excellent insulation properties.

In addition to carbon fibers, various carbon-based current collectors such as carbon paper, carbon-nanotube (CNT) paper, carbon felt, and carbon foam may of course be applied.

The metal composites may include metals such as aluminum, copper, and nickel in a fiber or matrix form, and may exhibit excellent electrical conductivity and thermal conductivity.

The positive electrode active material may include lithium cobalt oxide (LiCoO₂), lithium iron phosphate (LiFePO₄), lithium manganese oxide (Limn₂O₄), lithium nickel cobalt manganese oxide (NCM), lithium nickel cobalt aluminum oxide (NCA), and the like.

The lithium cobalt oxide (LiCoO₂) may exhibit high energy density and stable charging and discharging characteristics, and the lithium iron phosphate (LiFePO₄) may exhibit excellent safety and long lifespan characteristics.

The lithium manganese oxide (LiMn₂O₄) may have low cost and environmental friendliness, and the lithium nickel cobalt manganese oxide (NCM) may exhibit high capacity and excellent rate characteristics. The lithium nickel cobalt aluminum oxide (NCA) may have high energy density and long lifespan.

In the casting process, conductive materials, binders, and solvents may be used together with the positive electrode active material.

The conductive materials may include acetylene black, Ketjen black, graphene, carbon nanotubes, and the like, and may assist electrical connection between the positive electrode active materials and improve electrical conductivity of the electrode.

The binders may include polyvinylidene fluoride (PVDF), polytetrafluoroethylene (PTFE), carboxymethyl cellulose (CMC), and the like, and may function to fix the positive electrode active material and the conductive material to the first inner skin 110.

The solvents may include N-methyl-2-pyrrolidone (NMP), dimethylformamide (DMF), water, and the like, and may provide appropriate viscosity and fluidity in the casting process.

In the operation (a1-3), a negative electrode active material may be cast onto the second inner skin 120.

The second inner skin 120 may use the same material as the first inner skin 110, and may include carbon fiber-reinforced plastic (CFRP), glass fiber-reinforced plastic (GFRP), metal composites, and the like.

At this time, the negative electrode active material may include graphite, hard carbon, silicon, silicon oxide, lithium metal, lithium titanate, and the like.

The graphite may exhibit excellent electrical conductivity and stable charging and discharging characteristics, the hard carbon may have high capacity and fast charging and discharging rates.

The silicon may have a very high theoretical capacity but may undergo large volume changes during charging and discharging processes, and the silicon oxide may exhibit more stable cycle characteristics compared to silicon.

The lithium metal may have the highest theoretical capacity but may have a problem of dendrite formation, and the lithium titanate may be very safe and have a long lifespan.

In the casting process of the negative electrode active material, conductive materials and binders may also be used, and materials similar to those of the positive electrode may be applied. However, since the negative electrode operates at a low potential, electrochemical stability of the binder may be important, and thus, a combination of carboxymethyl cellulose (CMC) and styrene-butadiene rubber (SBR) may be used.

In addition, since intercalation and deintercalation of lithium ions occur in the negative electrode, particle size and surface treatment may significantly affect performance, and since lithium metal batteries are driven by plating and stripping of lithium, uniformity of the lithium metal surface and surface treatment for suppressing dendrite formation may be important.

Next, as shown in FIGS. 7 and 9, in the operation (a1-4), the first inner skin 110 may be installed to surround one side of the solid electrolyte.

In the operation (a1-4), electrochemical connection and structural support may be provided by disposing the first inner skin 110 in contact with the solid electrolyte part 130.

The first inner skin 110 may be installed to maintain stable contact at an interface with the solid electrolyte part 130, thereby securing electrochemical performance and mechanical stability of the battery.

In the installation process of the first inner skin 110, various techniques may be applied to optimize interfacial contact with the solid electrolyte part 130.

In the case of surface treatment techniques, interfacial adhesion may be improved through plasma treatment, chemical etching, mechanical roughening, or the like, and in the case of using an adhesive, interfacial bonding strength may be enhanced by using an electrochemically stable adhesive. In the case of a pressing process, interfacial contact may be improved by applying an appropriate pressure and temperature.

Since a contact pressure between the first inner skin 110 and the solid electrolyte part 130 may directly affect battery performance, a uniform pressure distribution may be secured during the installation process.

In the operation (a1-5), the second inner skin 120 may be installed to surround the other side of the solid electrolyte part 130.

In the operation (a1-5), electrochemical connection and structural support may be provided by disposing the second inner skin 120 in contact with the solid electrolyte part 130.

The second inner skin 120 may be installed to maintain stable contact at an interface with the solid electrolyte part 130, thereby securing electrochemical performance and mechanical stability of the battery.

The installation process of the second inner skin 120 may follow a procedure similar to that of the first inner skin 110, and the first inner skin 110 and the second inner skin 120 may be symmetrically disposed so as to uniformly support the solid electrolyte part 130 at both sides.

The installation order of the first inner skin 110 and the second inner skin 120 may be determined in consideration of manufacturing efficiency and quality control, and generally, the first inner skin 110 and the second inner skin 120 may be installed either simultaneously on both sides of the solid electrolyte part 130 or sequentially.

After the installation of the first inner skin 110 and the second inner skin 120 is completed, the alignment and contact of the entire structure may be inspected.

In the case of alignment inspection, a laser measuring device, a coordinate measuring machine, and the like may be used to check the positional accuracy of each component. In the case of contact state inspection, the uniformity of interfacial contact may be evaluated using a pressure-sensitive film, ultrasonic inspection, or the like. In the case of electrical connection inspection, an electrochemical connection state may be checked through impedance measurement, resistance measurement, or the like.

In the operation (a1-6), a plurality of fixing pins configured to provide a fixing force in a thickness direction so as to prevent separation between the solid electrolyte, the first inner skin 110, and the second inner skin 120 may be installed.

The fixing pins may function to prevent a delamination phenomenon and to secure overall structural stability, and may be implemented in various materials and forms. The materials of the fixing pins may include carbon fibers, metal wires, ceramic pins, polymer pins, and the like, each of which may exhibit different mechanical properties and electrochemical stability.

In the case of the ceramic pins, ceramic materials such as alumina and zirconia may be used, which may have high insulation and chemical stability, and in the case of the polymer pins, high-performance polymers such as polyimide and polyetheretherketone (PEEK) may be used, which may provide excellent lightweight and processability.

The fixing pins may be implemented in various geometric forms, such as straight, spiral, and hook types, each of which may exhibit different fixing force and installation methods.

In addition, the arrangement of the fixing pins may be determined in consideration of the size, shape, expected load, or the like of the solid electrolyte and the inner skins. In the case of a uniform arrangement, the fixing pins may be uniformly distributed over the entire region to provide a uniform fixing force.

In addition, in the case of a stress-concentration arrangement, the fixing pins may densely arranged in a region where stress concentration is expected, thereby providing effective reinforcement.

In the case of a corner-concentration arrangement, the fixing pins may be densely arranged in a corner region where delamination is likely to start, thereby preventing initial delamination.

Meanwhile, in the present embodiment, in the operation (a1), the core 100 may be formed in a semi-cured state.

The semi-cured state refers to a state in which a polymer matrix is partially cured so as to have the ability to maintain a certain shape while exhibiting deformable characteristics, thereby facilitating forming work in subsequent processes and improving the precision of a final shape.

The degree of semi-curing may be controlled by adjusting the amount of curing agent, curing temperature, and curing time, and may generally be set to a certain ratio level compared to a hardness in a fully cured state.

At this time, control of the semi-cured state may be monitored through analytical techniques such as differential scanning calorimetry (DSC), dynamic mechanical analysis (DMA), and gel fraction measurement.

In the case of the DSC, the degree of curing may be quantitatively evaluated by measuring residual curing heat. In the case of the DMA, the progress of curing may be identified by measuring changes in storage modulus and loss modulus. In the case of the gel fraction measurement, a crosslinking density may be evaluated by measuring a ratio of a polymer in a gel form that is not dissolved in a solvent.

In addition, the formation of the semi-cured state of the core 100 may be performed through a stepwise curing process.

In a primary curing, initial curing may be performed at room temperature for a predetermined period of time, during which shape fixation and handleability may be secured, and in a secondary curing, partial curing may be performed at an intermediate temperature to achieve a semi-cured state.

Final curing may be performed at a high temperature in a subsequent process to secure complete mechanical properties.

Each of the detailed processes of the operation (a1) described above may determine electrochemical performance and mechanical stability of the battery including the structural pressurization unit 200, and optimal performance may be secured through precise control and quality management of each process.

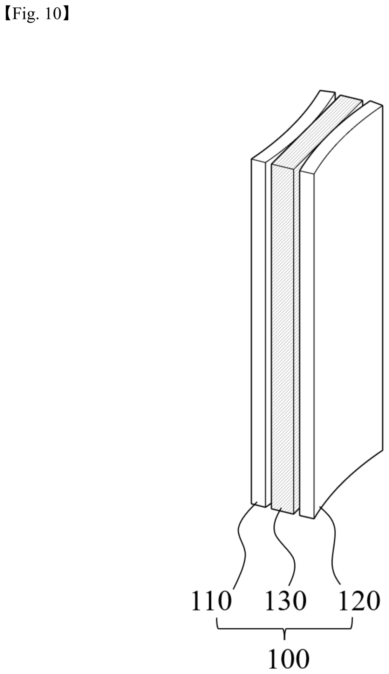

FIG. 10 is a view additionally illustrating a method applicable to the operations (a1-4) and (a1-5) in the method of manufacturing a battery including the structural pressurization unit 200 according to the first embodiment of the present invention.

As shown in FIG. 10, in the present embodiment, the first inner skin 110 and the second inner skin 120 may each be formed in a shape in which a cross section in the width direction is curved so as to deform in a direction that prevents separation from the solid electrolyte.

Such a curved shape may present an alternative configuration method applicable to the process of installing the first inner skin 110 and the second inner skin 120 on the solid electrolyte part 130 in the operations (a1-4) and (a1-5).

The curved shape of the first inner skin 110 may function to enhance interfacial contact with the solid electrolyte part 130 when the first inner skin 110 is disposed to surround one side of the solid electrolyte part 130.

Such a curved cross-sectional shape may be formed to have curvature in the width direction and may be designed to deform in a direction that prevents the first inner skin 110 from separating from the solid electrolyte part 130 when external load or internal expansion occurs.

The direction and magnitude of curvature may be optimized in consideration of expected load conditions and expansion characteristics, thereby effectively suppressing an interfacial delamination phenomenon.

When the second inner skin 120 is disposed opposite to the first inner skin 110 to surround the other side of the solid electrolyte part 130, the curved shape thereof may secure interfacial stability based on the same principle.

The second inner skin 120 may have a symmetric curved shape with respect to the first inner skin 110, thereby uniformly supporting the solid electrolyte part 130 at both sides and maintaining stable interfacial contact.

In addition, the curved shape of the second inner skin 120 may provide an effect of dispersing stress generated during charging and discharging processes and preventing localized stress concentration.

In designing the curved shapes as described above, variables such as radius of curvature, curvature direction, and degree of curvature may be considered. As the radius of curvature decreases, large deformations may be accommodated more stably, but manufacturing difficulty may increase.

The direction of curvature may be determined in consideration of expected load direction and expansion direction, and the degree of curvature may be set in consideration of a balance between required flexibility and rigidity.

Through optimization of such design variables, the curved shapes of the first inner skin 110 and the second inner skin 120 may simultaneously improve mechanical rigidity and electrochemical performance of the battery.

In addition, the curved shapes of the first inner skin 110 and the second inner skin 120 may be implemented through various manufacturing processes.

In the case of press forming, a precise curvature may be implemented using dies, and in the case of roll forming, continuous forming may be possible, thereby improving productivity. In addition, thermal forming may be applied to thermoplastic materials, and implementation of complex shapes may be facilitated.

In addition, a forming method utilizing fiber asymmetry of composite materials may be applied. Such a method enables fabrication of composite material structures having curvature without using dies by arranging fibers in an asymmetric stacking sequence utilizing anisotropic properties of the composite material.

The anisotropy of the composite material is caused by differences in coefficient of thermal expansion, elastic modulus, and shrinkage rate according to fiber orientations, and such properties may be intentionally utilized to induce spontaneous deformation during a curing process. Specifically, when prepregs having different fiber orientations are asymmetrically stacked, thermal shrinkage and chemical shrinkage occurring during the curing process may appear differently in each layer, thereby forming intrinsic curvature in the entire structure.

Such an asymmetric stacking method may be implemented with various stacking sequences, and each stacking sequence may exhibit different radius of curvatures and different deformation patterns. In addition, by adjusting the stacking sequence and thickness ratio of each layer, desired curvature and shape may be precisely controlled, thereby reducing costs of producing complex dies while enabling mass production of curved structures with consistent quality.

Each forming method may exhibit different characteristics in terms of precision, uniformity, and productivity of the curved shapes, and an appropriate method may be selected according to battery requirements and production conditions.

In addition, the curved first and second inner skins 110 and 120 may provide an effect of increasing a contact area with the solid electrolyte part 130.

Compared with a flat shape, the curved shape may secure a larger contact area, thereby improving interfacial adhesion and electrical contact resistance. In addition, the curved shape may provide an effect of dispersing stress to alleviate stress concentration at an interface, thereby improving durability against fatigue stress generated during repeated charging and discharging processes.

Similarly, in the present embodiment, the curved first and second inner skins 110 and 120 may be implemented with various materials such as carbon fiber-reinforced plastic (CFRP), glass fiber-reinforced plastic (GFRP), metal composites, and the like. Each material may exhibit different mechanical properties and formability, and a material suitable for implementing the curved shape may be selected.

In addition, the first and second inner skins 110 and 120 having a curved shape may improve adaptability in response to expansion of the solid electrolyte part 130. When the solid electrolyte part 130 expands during charging and discharging processes, the curved shapes may provide a margin that accommodates such expansion while maintaining interfacial contact. Accordingly, interfacial separation or stress concentration caused by expansion may be prevented, thereby improving the lifespan and performance of the battery.

That is, FIG. 10 illustrates an alternative configuration method in which the first inner skin 110 and the second inner skin 120 are formed in a curved shape to secure interfacial stability with the solid electrolyte part 130, and presents an additional technical solution applicable to the operations (a1-4) and (a1-5).

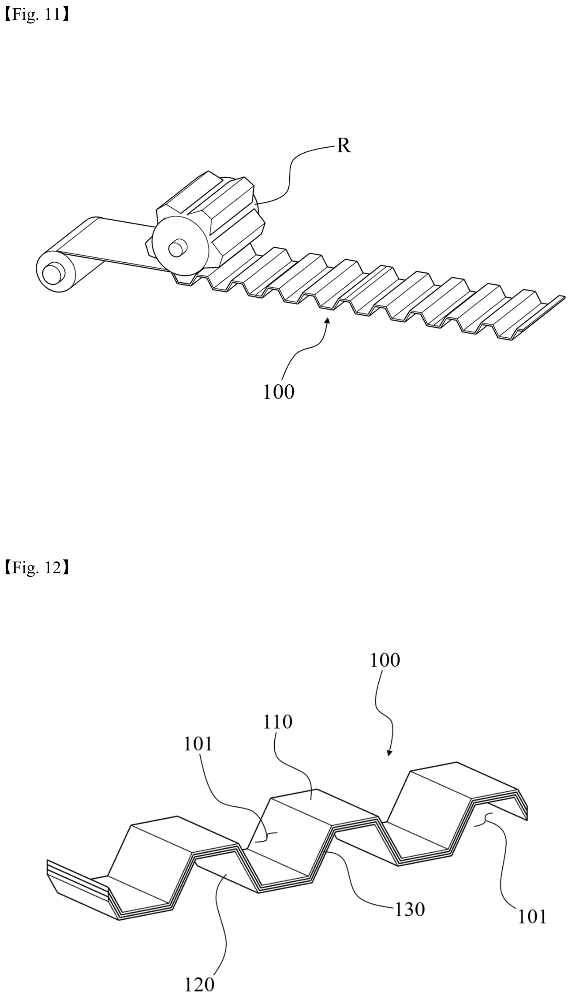

FIGS. 11 and 12 are views respectively illustrating a state of performing the operation (a1.1) and a state of the core 100 formed thereby in the method of manufacturing a battery including the structural pressurization unit 200 according to the first embodiment of the present invention.

As shown in FIG. 11, in the present embodiment, the operation (a1.1) is an operation of forming the core 100 into a predefined repetitive bending shape to form the mounting space 101 in which the structural pressurization unit 200 is provided, and is a forming process of implementing structural design of the battery.

To this end, in the present embodiment, in the operation (a1.1), the core 100 may be pressurized through the roller unit R having a processed pattern formed on an outer surface thereof to form the predetermined repetitive bending shape.

The roller unit R may apply repetitive and uniform pressure to a surface of the core 100 to perform precise shape processing, thereby implementing a bending structure with uniform quality.

The processed pattern formed on the outer surface of the roller unit R may be variously designed according to a target bending shape.

In the case of a hexagonal pattern, a honeycomb structure may be provided to ensure high structural rigidity and efficient space utilization, and in the case of a circular pattern, stress concentration may be minimized and uniform load distribution may be achieved. In the case of a triangular pattern, high geometric stability may be provided and rigidity in a specific direction may be maximized.

Since each pattern may exhibit different mechanical properties and forming characteristics, an optimal pattern may be selected according to an intended use and required performance of the battery.

Pressing conditions of the roller unit R may be precisely controlled according to material properties and a target shape of the core 100.

The magnitude of the pressurization force is an important variable that determines the degree of deformation and shape precision of the core 100, and excessive pressurization force may cause material damage, whereas insufficient pressurization force may result in incomplete forming. Pressing speed may directly affect forming quality and production efficiency, and temperature conditions may influence the semi-cured state and formability of the core 100. Through optimization of such process parameters, a repetitive bending shape with consistent quality may be implemented.

In addition, the repetitive bending shape formed in the operation (a1.1) may function to provide the mounting space 101 in which the structural pressurization unit 200 can be effectively installed.

The size and shape of the mounting space 101 may be adjusted according to types and properties of the structural pressurization unit 200, and may be designed to accommodate various forms of the structural pressurization unit 200 such as volume-expanding foams, shape memory materials, and elastic bodies.

In addition, the mounting space 101 may be formed to enable effective contact between the structural pressurization unit 200 and the core 100 and transmission of the pressurization force.

FIG. 12 illustrates a state in which the core 100 formed as a result of performing the operation (a1.1) in the present embodiment is processed into a repetitive bending shape, and in which the mounting space 101 is formed.

In the present embodiment, a honeycomb shape is exemplified, and such a honeycomb shape is composed of a repetitive hexagonal pattern to provide excellent mechanical properties. The honeycomb structure is an efficient structural form found in nature and has a characteristic of achieving maximum rigidity with minimum material, thereby simultaneously securing both lightweight and structural stability of the battery.

As such, although the honeycomb-shaped core 100 is composed of a repetitive hexagonal pattern, the core 100 may be processed into a truncated honeycomb form in the manufacturing process using the above-described roller unit R.

In addition, the truncated honeycomb-shaped cores 100 may be attached to each other to form a complete hexagonal shape. In the attachment process, joint surfaces of each truncated core 100 may be precisely fitted to secure structural integrity, and various methods such as adhesive, welding, and mechanical fastening may be applied to improve strength and durability of joints.

The complete hexagonal-shaped core 100 may increase mechanical rigidity of the battery, enable efficient utilization of internal space, and provide a stable foundation in forming the mounting space 101 for the structural pressurization unit 200.

However, the honeycomb-shaped core 100 may be implemented in various ways and is not necessarily limited to the manner of the present embodiment. For example, the core 100 may be used in a truncated honeycomb shape as is rather than in a complete honeycomb shape, or a method of folding and mutually bonding the truncated honeycomb-shaped cores along predetermined portions may be used.

Honeycomb-shaped cells may provide a space serving as the mounting space 101 to accommodate the structural pressurization unit 200. The size and shape of each cell may be adjusted according to types of the structural pressurization unit 200 and required pressurization force, and due to geometric characteristics of the hexagonal shape, uniform stress distribution and efficient space utilization may be achieved.

In addition, honeycomb-structured walls may function to effectively transmit the pressurization force transmitted from the structural pressurization unit 200 to the electrolyte part 130.

In addition, a thickness of the honeycomb-shaped wall may be designed in consideration of a balance between structural rigidity and capacity of the electrolyte part 130. As the thickness of the wall increases, mechanical rigidity may be improved, but an effective volume of the electrolyte part 130 may be reduced, whereas as the thickness of the wall decreases, capacity of the electrolyte part 130 may be increased, but structural stability may deteriorate. Accordingly, an optimal thickness of the wall may be determined according to the intended use and performance requirements of the battery.

In the present embodiment, the honeycomb shape may be variously adjusted according to pattern design and pressing conditions of the roller unit R, and may be optimized to meet the required performance of the battery.

However, in addition to the hexagonal shape, various geometric repetitive patterns such as a circular shape, a triangular shape, and a quadrangular shape may be applied, and each shape may exhibit different mechanical properties and manufacturing characteristics. Further, through hybrid patterns, different types of cells may be combined to provide customized properties for specific portions. In addition, shapes such as a hexagonal shape and a circular shape may also be configured to have an optimal shape adapted to load distribution through a density gradient.

Meanwhile, as described above, in the forming process of the core 100, a semi-cured state of the material may affect forming quality. In the semi-cured state, the material may have both appropriate flowability and shape-retaining ability, thereby enabling precise forming while preventing shape distortion.

After the forming process according to this operation, post-curing may be performed through the operation (a1.2) so that final mechanical properties may be secured, thereby achieving structural stability required for installation and operation of the structural pressurization unit 200.

The operation (a1.2) is an operation post-curing the core 100, and is a curing process of determining the final shape and mechanical properties of the formed core 100.

In the post-curing process, heat treatment and curing may be performed to improve structural stability and durability of the core 100. Such a process may enhance the quality of the manufacturing process, prevent deformation of the core 100, and maintain the electrochemical performance and mechanical properties of the battery.

Post-curing conditions may include parameters such as curing temperature, time, and pressure, and optimization thereof may allow adjustment of physical properties of the core 100.

In addition, through the post-curing process, the core 100 may prevent deformation in subsequent processes and secure structural stability required for installation and operation of the structural pressurization unit 200.

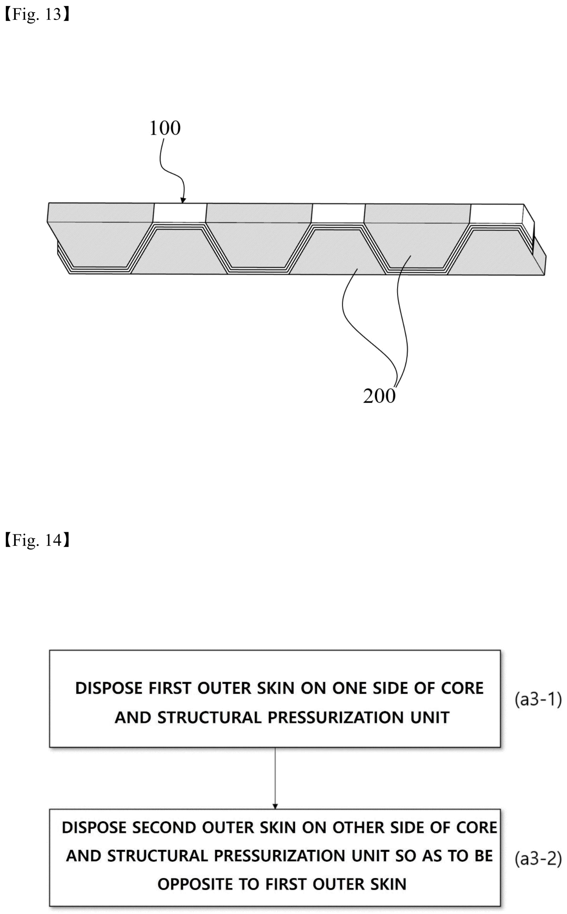

FIG. 13 is a view illustrating a state of performing the process of the operation (a2) in the method of manufacturing a battery including the structural pressurization unit 200 according to the first embodiment of the present invention.

As shown in FIG. 13, in the present embodiment, the operation (a2) is an operation of installing the structural pressurization unit 200 configured to generate a pressurization force on the core 100 by a mechanical support force so as to be in contact with the core 100, and is a process of implementing an expansion suppression function of the battery.

In the operation (a2), the structural pressurization unit 200 may be disposed in the mounting space 101 of the core 100 to form a structure capable of transmitting the pressurization force while being in direct or indirect contact with the electrolyte part 130.

In the present embodiment, the structural pressurization unit 200 may be stably installed in the mounting space 101 that is formed by the repetitive bending shape of the core 100, and the mounting space 101 may be processed into an optimized form according to the type and characteristics of the structural pressurization unit 200.

As described above, the size and shape of the mounting space 101 may be implemented in various geometric forms such as hexagonal, circular, or triangular, and each form may determine a contact area with the structural pressurization unit 200 and efficiency of pressurization force transmission.

In addition, the structural pressurization unit 200 installed in the operation (a2) may be implemented through various mechanisms.

The structural pressurization unit 200 using a volume-expanding foam may include an urethane foam, an epoxy foam, a phenolic foam, and the like, and may exhibit a characteristic of maintaining a constant pressurization force while filling the mounting space 101 through chemical reaction or physical expansion after initial installation.

Such a volume-expanding foam may uniformly fill a space around the electrolyte part 130 during expansion to form a uniform pressure distribution, and may provide a reaction force corresponding to expansion of the core 100.

In the case of the structural pressurization unit 200 using a shape memory material, a pressurization force may be applied to the core 100 as the shape changes in response to a temperature rise of the electrolyte part 130.

Such a shape memory material may be heat-treated so that an appropriate pressurization force corresponding to each temperature range of the electrolyte part 130 is pre-calculated and the material deforms according to a change in temperature of the electrolyte part 130 to adjust the pressurization force. A temperature-shape relationship of the shape memory material may be programmed in consideration of operating conditions of the battery and thermal characteristics of the electrolyte part 130, thereby enabling automatic pressurization control.

The structural pressurization unit 200 using elastic bodies may be formed to have an elastic restoring force, and may provide a reaction force by being compressively deformed due to expansion of the core 100.

Such elastic bodies may include silicone, rubber, elastic polymers, and the like, each of which may exhibit different elastic moduli and compression characteristics.

In addition, the elastic bodies may include an elastic module that provides a reaction force through mechanical deformation upon compression, and such an elastic module may be implemented in the form of a spring, bellows, a diaphragm, or the like.

However, the elastic module is not limited to such forms and may be implemented in various other forms.

Meanwhile, in the operation (a2), the installation method and position of the structural pressurization unit 200 may directly affect the performance of the battery, and thus precise placement and fixation may be performed.

The structural pressurization unit 200 may be disposed to form a uniform pressure distribution at a contact surface with the core 100 to prevent localized stress concentration, and to improve a pressurization effect on the electrolyte part 130. In addition, in the installation process of the structural pressurization unit 200, effective transmission of pressurization force may be enabled while maintaining structural integrity of the core 100.

After the installation of the structural pressurization unit 200 is completed, mechanical stability and electrochemical performance of the entire system may be verified. The installed structural pressurization unit 200 may operate as an automatic pressurization system in response to expansion of the core 100, thereby maintaining stable performance even during repeated charging and discharging processes over a long period of time.

In addition, the structural pressurization unit 200 may operate as a passive system that provides a pressurization force in direct response to physical changes in the electrolyte part 130 without external control signals or energy supply, thereby securing simplicity and reliability of the system.

Through the above operation (a2), the core 100 in which the structural pressurization unit 200 is installed may serve as a base structure for installation of the rigidity reinforcing member 250 in the operation (a3), which is a subsequent process, and the battery may simultaneously secure suppression of expansion of the core 100 and structural stability.

FIG. 14 is a diagram illustrating detailed operations of the operation (a3) in the method of manufacturing a battery including the structural pressurization unit 200 according to the first embodiment of the present invention.

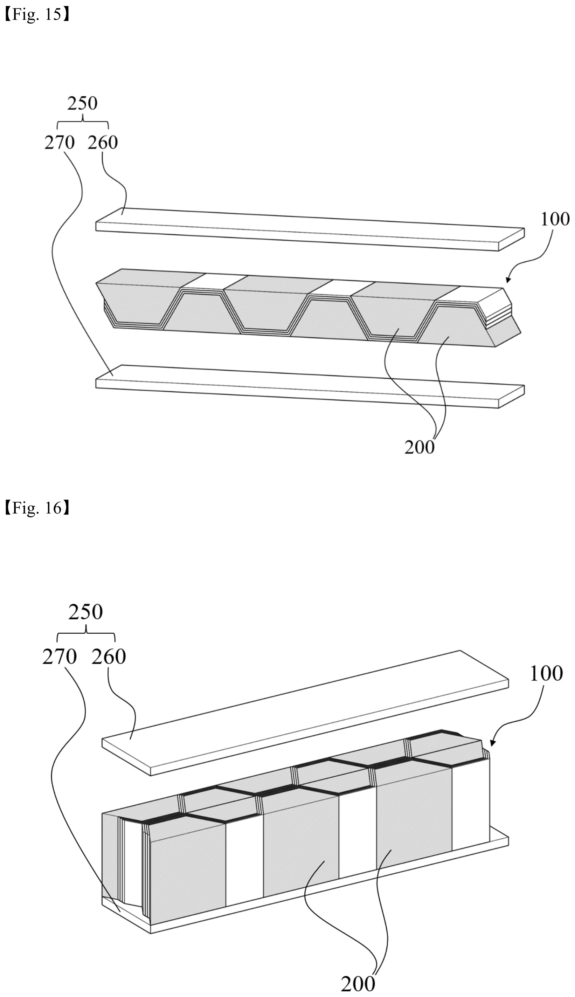

In addition, FIG. 15 is a view illustrating a state of performing the process of the operation (a3) in the method of manufacturing a battery including the structural pressurization unit 200 according to the first embodiment of the present invention.

As shown in FIGS. 14 and 15, in the present embodiment, the operation (a3) is an operation of installing the rigidity reinforcing member 250 on outer sides of the core 100 and the structural pressurization unit 200, and is a finishing process to secure overall structural completeness of the battery.

In the present embodiment, the operation (a3) may include an operation (a3-1) of disposing the first outer skin 260 on one side of the core 100 and the structural pressurization unit 200, and an operation (a3-2) of disposing the second outer skin 270 on the other side of the core 100 and the structural pressurization unit 200 so as to be opposite to the first outer skin 260.

The rigidity reinforcing member 250 may be formed of various materials such as carbon fiber-reinforced plastic (CFRP), glass fiber-reinforced plastic (GFRP), and metal composites, each of which may exhibit different mechanical properties and weight characteristics.

The CFRP may provide high rigidity and lightweight, and the GFRP may be relatively economical while providing appropriate rigidity. The metal composites may provide excellent electrical conductivity and thermal conductivity, and may be easily processed into complex shapes.

However, the rigidity reinforcing member 250 is not limited to such forms and may be implemented in various other forms.

As shown in FIG. 15, in the present embodiment, the first outer skin 260 and the second outer skin 270 may be stacked in a thickness direction of the electrolyte part 130 to be disposed so as to surround outer sides of the core 100 and the structural pressurization unit 200.

Such a thickness-direction stacking method may maximize a direct pressurization effect on the battery and may function to effectively suppress expansion of the core 100.

That is, the thickness-direction stacking method may allow the first outer skin 260 and the second outer skin 270 to be disposed in a vertical direction of the electrolyte part 130 to directly transmit the compressive force, thereby achieving a synergistic effect together with the structural pressurization unit 200.

**In** addition, in the thickness-direction stacking method, bonding strength between the first outer skin 260 and the second outer skin 270 may directly affect the performance of the battery, and thus an appropriate adhesive or mechanical coupling method may be applied.

When the adhesive is used, an electrochemically stable adhesive may be selected so as not to adversely affect the performance of the battery, and when the mechanical coupling method is used, fastening elements such as bolts, rivets, or clamps may be utilized.

**In** addition, in the thickness-direction stacking, the thickness and rigidity of the first outer skin 260 and the second outer skin 270 may be variables determining a pressurization effect, and thus an appropriate design may be performed according to a required pressurization force.

FIG. 16 is a view additionally illustrating a method applicable to the process of the operation (a3) in the method of manufacturing a battery including the structural pressurization unit 200 according to the first embodiment of the present invention.

As shown in FIG. 16, in the present embodiment, as another applicable method of the operation (a3), a method may be applied in which the first outer skin 260 and the second outer skin 270 are stacked in a width direction of the electrolyte part 130 to be disposed so as to surround outer sides of the core 100 and the structural pressurization unit 200.

Such a width-direction stacking method may adjust overall rigidity distribution of the battery and may improve resistance to torsion or bending of the battery.

That is, in the width-direction stacking method, the first outer skin 260 and the second outer skin 270 may be disposed in a lateral direction of the electrolyte part 130 to function to secure overall structural rigidity.

The width-direction stacking method may be particularly useful for large-sized batteries or elongated-form batteries, and may be advantageous in securing overall shape stability of the battery.

In addition, the width-direction stacking may facilitate connection and support between adjacent batteries during modularization or pack configuration, and may improve structural stability at a system level.

In the width-direction stacking, a distance between the first outer skin 260 and the second outer skin 270 may have a greater influence on structural rigidity rather than pressurization effect, and thus an appropriate gap and coupling method may be selected according to intended use of the battery and required performance characteristics.

As such, differences in stacking directions may have different influences on pressurization characteristics and mechanical properties of the battery. Accordingly, an appropriate stacking direction may be selected depending on an operating environment and required performance of the battery, and a hybrid structure combining the two methods may also be applied as necessary.

In the present embodiment, structural characteristics of the battery may be adjusted through such various stacking methods, and optimal performance may be achieved through a combination of the structural pressurization unit 200 and the rigidity reinforcing member 250.

After completion of the operation (a3), mechanical stability and electrochemical performance of the entire battery system may be comprehensively verified, thereby completing manufacture of a high-performance structural battery.

Specific embodiments of the battery including the structural pressurization unit and the method of manufacturing the same have been described above, and hereinafter, specific embodiments of the battery including the active pressurization unit and a method of manufacturing the same will be described.

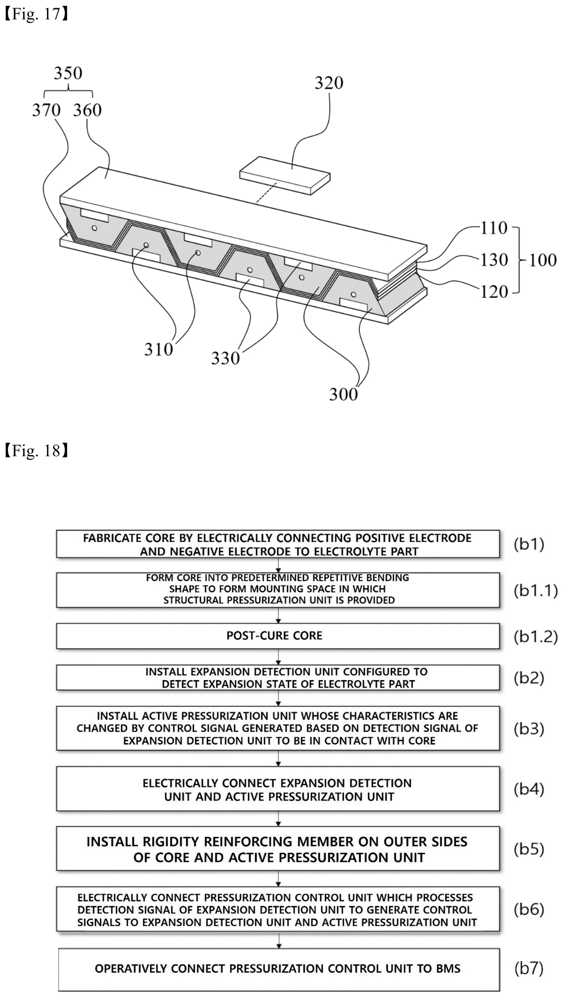

FIG. 17 is a view illustrating a state of a battery including an active pressurization unit 300 according to a second embodiment of the present invention.

As shown in FIG. 17, in the present embodiment, the battery including the active pressurization unit 300 may include a core 100, the active pressurization unit 300, a heat generation unit 310, an expansion detection unit 330, a pressurization control unit 320, and a rigidity reinforcing member 350.

The core 100 may include a first inner skin 110, a second inner skin 120, and an electrolyte part 130, and may serve as a basic structure of the battery that performs functions of storing and releasing electrochemical energy.

The first inner skin 110 is disposed to surround one side of the electrolyte part 130, and may be formed as a positive electrode by casting a positive electrode active material thereonto.

In addition, the second inner skin 120 is disposed opposite to the first inner skin 110 to surround the other side of the electrolyte part 130, and may be formed as a negative electrode by casting a negative electrode active material thereonto.

The electrolyte part 130 serves as a medium electrically connecting the positive electrode and the negative electrode, and may provide an ion transport path during charging and discharging processes.

In the present embodiment, the electrolyte part 130 may include a solid electrolyte, and may provide improved safety and structural stability compared to a liquid electrolyte. In addition, the electrolyte part 130 may include an SMP having a shape memory property, and may thereby perform a smart electrolyte function of automatically changing its characteristics in response to temperature changes.

The core 100 may be processed into a predetermined repetitive bending shape so as to form a mounting space 101 in which the active pressurization unit 300 is provided.

Such a repetitive bending shape may be implemented in various geometric forms such as hexagonal, circular, or triangular, and each form may exhibit different mechanical properties and expansion response performance.

The mounting space 101 may be precisely formed so that the active pressurization unit 300 can be stably disposed and effectively transmit a pressurization force.

The active pressurization unit 300 is a component that provides a pressurization force to the core 100 by changing its characteristics in response to control signals generated based on detection signals received from the expansion detection unit, actively reacts to external control, and may variably provide an appropriate level of pressurization force according to an expansion state of the core 100.

In the present embodiment, the active pressurization unit 300 may be implemented based on various active driving mechanisms such as shape memory materials, electroactive polymers, piezoelectric actuators, and electromagnetic actuators, each of which may provide a pressurization force through different principles and characteristics.

In the case of the present embodiment, the active pressurization unit 300 using a shape memory material is applied.

The active pressurization unit 300 using a shape memory material may provide a pressurization force to the core 100 as a shape thereof changes in response to a change in temperature of the electrolyte part 130, and the shape change may also be actively induced by a control signal.

In such a case, the heat generation unit 310 may be embedded in the active pressurization unit 300, and may convert electrical energy into thermal energy in response to the control signal to induce deformation of the shape memory material.

For example, the heat generation unit 310 may be formed as a conductive wire and provide a required temperature to the shape memory material by utilizing the principle of Joule heating. The heat generation unit 310 may be disposed in a distributed manner inside the shape memory material to form a uniform temperature distribution, and precise temperature control may be enabled by adjusting the magnitude and duration of the control signal.

In addition, in the case of the active pressurization unit 300 using an electroactive polymer, a polymer material that changes in size or shape upon application of an electric field may be used, and a deformation amount and pressurization force may be precisely controlled by adjusting the magnitude and direction of an applied voltage.

In addition, the active pressurization unit 300 using elastic bodies may be formed to have an elastic restoring force, and, by being compressively deformed due to expansion of the core 100, may provide a reaction force in response to a control signal.

The expansion detection unit 330 is a sensor system that detects an expansion state of the core 100 in real time, functions to quantitatively measure physical changes in the electrolyte part 130, converts the measured changes into electrical signals, and transmits the electrical signals to the pressurization control unit 320.

The expansion detection unit 330 may be implemented based on various sensor technologies such as strain sensors, pressure sensors, temperature sensors, and displacement sensors, each of which may be disposed in a distributed manner at various positions of the electrolyte part 130 to individually detect expansion states of the respective portions.

The strain sensors may be implemented as fiber-type sensors, and may calculate a degree of expansion in real time by measuring resistance changes according to deformation of the electrolyte part 130.

The temperature sensors may be implemented as thermocouples, thermistors, infrared sensors, or the like, and may estimate expansion states indirectly by measuring changes in temperature of the core 100.

The expansion detection unit 330 may be configured by combining a plurality of sensors, thereby improving measurement accuracy and providing a backup function against sensor errors.

The pressurization control unit 320 is a control system that processes detection signals received from the expansion detection unit and generates control signals to be transmitted to the active pressurization unit 300 and the heat generation unit 310, and may include a microprocessor, a digital signal processor, an analog circuit, and the like.

In addition, the pressurization control unit 320 may analyze an expansion state of the core 100, control the active pressurization unit 300 so that an optimal pressurization force is provided, and apply various control algorithms to optimize performance of the system.

Further, the pressurization control unit 320 may be operatively connected to a BMS to perform integrated control in consideration of overall state information of the battery.

In addition, the active pressurization unit 300 of the present invention may actively respond to dynamic expansion characteristics according to charging and discharging rates. Specifically, during high-speed charging and discharging, the pressurization control unit 320 may perform adaptive pressurization control based on real-time detection information from the expansion detection unit 330 with respect to rapid expansion variations or non-uniform pressure distributions resulting from dendrite formation in lithium metal batteries. Through this, structural stability of the electrolyte part 130 may be maintained and degradation progression may be suppressed, thereby improving the lifespan and performance of the battery even when the charging and discharging rates increase.

In particular, when localized pressure imbalances resulting from dendrite formation in the lithium metal batteries are detected, the pressurization control unit 320 may control the active pressurization unit 300 to selectively apply increased pressurization force to the corresponding region, which may suppress dendrite growth and improve uniformity of lithium deposition.

In addition, the active pressurization unit 300 of the present invention may adaptively respond to structural deformation caused by external loads. When a structural battery is applied to an actual application field, external loads due to various causes may be applied, and deformation of the entire battery structure may occur, which may change a pressurization distribution and strength applied to the electrolyte part 130.

Accordingly, the expansion detection unit 330 of the present embodiment may detect structural deformation caused by external loads in real time, and the detected information may include not only expansion of the electrolyte part 130 but also complex deformation states such as compression, tension, shear, and torsion caused by external loads. The pressurization control unit 320 may analyze such complex deformation information to identify a direction and a magnitude of the external load, and may control the active pressurization unit 300 so that an optimal pressurization force is provided to the electrolyte part 130 even under deformed structural conditions.

For example, when a compressive load is applied from the outside and the battery structure is compressively deformed, the existing pressurization force may become excessive, and thus, the pressurization control unit 320 may reduce the output from the active pressurization unit 300 so as to maintain an appropriate pressurization force on the electrolyte part 130. Conversely, when a tensile load is applied and the structure is elongated, the pressurization force may become insufficient, and the output may be increased to compensate for the insufficiency.

Through such external load adaptive control, the structural battery of the present invention may maintain consistent electrochemical performance even in various mechanical environments, while simultaneously securing both structural stability and battery performance. In addition, by being operatively connected to the BMS, external load conditions may be monitored and predictive control may be performed at a system level, thereby improving durability and reliability of the structural battery.

The rigidity reinforcing member 350 may be provided to surround outer sides of the core 100 and the active pressurization unit 300, and may function to improve the overall structural stability and mechanical rigidity of the battery.

The rigidity reinforcing member 350 may include carbon fiber-reinforced plastic (CFRP), glass fiber-reinforced plastic (GFRP), metal composites, and the like, and each material may exhibit different mechanical properties and weight characteristics.

The rigidity reinforcing member 350 may include a first outer skin 360 and a second outer skin 370, wherein the first outer skin 360 is disposed to surround one side of the core 100 and the active pressurization unit 300, and the second outer skin 370 is disposed opposite to the first outer skin 360 to surround the other side of the core 100 and the active pressurization unit 300.

As such, in the present embodiment, the battery including the active pressurization unit 300 incorporates an intelligent pressurization system capable of actively suppressing expansion in response to real-time changes in the state of the electrolyte part 130, thereby adaptively responding to various operating conditions and environmental changes.

Since the active pressurization unit 300 may precisely adjust the pressurization force according to a degree of expansion of the core 100, it is possible to prevent damage to the electrolyte part 130 caused by excessive pressurization force while providing sufficient pressurization force to improve expansion suppression effects.

FIG. 18 is a diagram illustrating each operation of a method of manufacturing a battery including the active pressurization unit 300 according to the second embodiment of the present invention.

As shown in FIG. 18, in the present embodiment, the method of manufacturing the battery including the active pressurization unit 300 may sequentially include an operation (b1), an operation (b2), an operation (b3), an operation (b4), an operation (b5), an operation (b6), and an operation (b7), and each operation may have a specific function and purpose in the manufacturing process of the battery, and precise control and quality management may be performed for each operation.

The operation (b1) is an operation of fabricating a core 100 by electrically connecting a positive electrode and a negative electrode to an electrolyte part 130, and is a process of forming a basic structure for simultaneously securing electrochemical performance and mechanical stability of the battery.

In the operation (b1), a solid electrolyte may be formed as the electrolyte part 130, and a positive electrode active material and a negative electrode active material may be cast onto a first inner skin 110 and a second inner skin 120, respectively, and assembled with the solid electrolyte to constitute an electrochemically connected core 100.

In the operation (b1), the core 100 may be formed in a semi-cured state, thereby facilitating forming work in subsequent processes and improving the precision of a final shape.

An operation (b1.1) is an operation of forming the core 100 into a predetermined repetitive bending shape to form a mounting space 101 in which an active pressurization unit 300 is provided, and is a forming process for implementing structural design of the battery.

In the operation (b1.1), the core 100 may be pressurized by a roller unit R having a processed pattern formed on an outer surface thereof to form the predetermined repetitive bending shape, and various types of bending structures may be implemented by adjusting the pattern design and pressing conditions of the roller unit R.

An operation (b1.2) is an operation of post-curing the core 100, and is a curing process for determining the final shape and mechanical properties of the formed core 100. Through the post-curing process, the core 100 may secure structural stability and prevent deformation in subsequent processes, and required mechanical properties may be achieved by optimizing curing conditions.

The operation (b2) is an operation of installing an expansion detection unit 330 that detects an expansion state of the core 100, and is a process of establishing a real-time monitoring system for the battery.

In the operation (b2), the expansion detection unit 330 may be disposed inside or outside the battery to configure a system capable of quantitatively measuring physical changes in the electrolyte part 130 and converting the physical changes into electrical signals.

The expansion detection unit 330 may be implemented based on various sensor technologies such as strain sensors, pressure sensors, temperature sensors, and displacement sensors, which may be disposed in a distributed manner at different positions of the electrolyte part 130 to individually detect expansion states of the respective portions.

The operation (b3) is an operation of installing the active pressurization unit 300 whose characteristics are changed by a control signal generated based on a detection signal of the expansion detection unit 330 to be in contact with the core 100, and is a process of implementing an active pressurization system.

In the operation (b3), the active pressurization unit 300 may be disposed so as to variably provide an appropriate level of pressurization force according to an expansion state of the core 100.

The active pressurization unit 300 may be implemented based on various active driving mechanisms such as shape memory materials, electroactive polymers, piezoelectric actuators, and electromagnetic actuators, and in the case of the shape memory material applied in the present embodiment, a heat generation unit 310 may be embedded to induce active shape change in response to the control signal.

The operation (b4) is an operation of electrically connecting the expansion detection unit 330 and the active pressurization unit 300, and is a process of constructing an integrated system capable of transmitting detection signals and generating control signals.

In the operation (b4), expansion information of the core 100 measured by the expansion detection unit 330 may be transmitted to the active pressurization unit 300, thereby establishing an electrical connection so that real-time pressurization control is enabled. In this case, the electrical connection may be implemented with appropriate wiring design and shielding treatment to secure accuracy and stability of signal transmission.

The operation (b5) is an operation of installing a rigidity reinforcing member 350 on outer sides of the core 100 and the active pressurization unit 300, and is a process of securing overall structural completeness of the battery.

In the operation (b5), a first outer skin 360 and a second outer skin 370 may each be disposed, and an optimal configuration may be implemented in consideration of performance characteristics according to a stacking direction.

The rigidity reinforcing member 350 may include carbon fiber-reinforced plastic (CFRP), glass fiber-reinforced plastic (GFRP), metal composites, and the like, and may function to improve mechanical rigidity and durability of the battery.

The operation (b6) is an operation of electrically connecting a pressurization control unit 320, which processes detection signals from the expansion detection unit 330 to generate control signals, to the expansion detection unit 330 and the active pressurization unit 300.

In the operation (b6), the system may be configured so that the pressurization control unit 320 analyzes the detection signals received from the expansion detection unit 330, generates optimal control signals according to an expansion state of the core 100, and transmits the control signals to the active pressurization unit 300.

The pressurization control unit 320 may include a microprocessor, a digital signal processor, an analog circuit, and the like, and may optimize system performance by applying various control algorithms.

The operation (b7) is an operation of operatively connecting the pressurization control unit 320 to a BMS, and is a process of enabling integrated control in consideration of overall state information of the battery.

In the operation (b7), an operative connection system may be established so that the pressurization control unit 320 receives various pieces of information such as a temperature of the electrolyte part 130, charging and discharging states, and a voltage from the BMS, and reflects the information in generation of control signals. Through operative connection with the BMS, overall performance optimization and safety of the battery may be ensured.

Through the present manufacturing method, the battery including the active pressurization unit 300 incorporates an intelligent pressurization system capable of actively suppressing expansion in response to real-time changes in the state of the electrolyte part 130, thereby adaptively responding to various operating conditions and environmental changes.

In addition, systematic management of respective manufacturing operations may ensure high quality and consistency, and lifespan extension and performance improvement of the battery may be achieved.

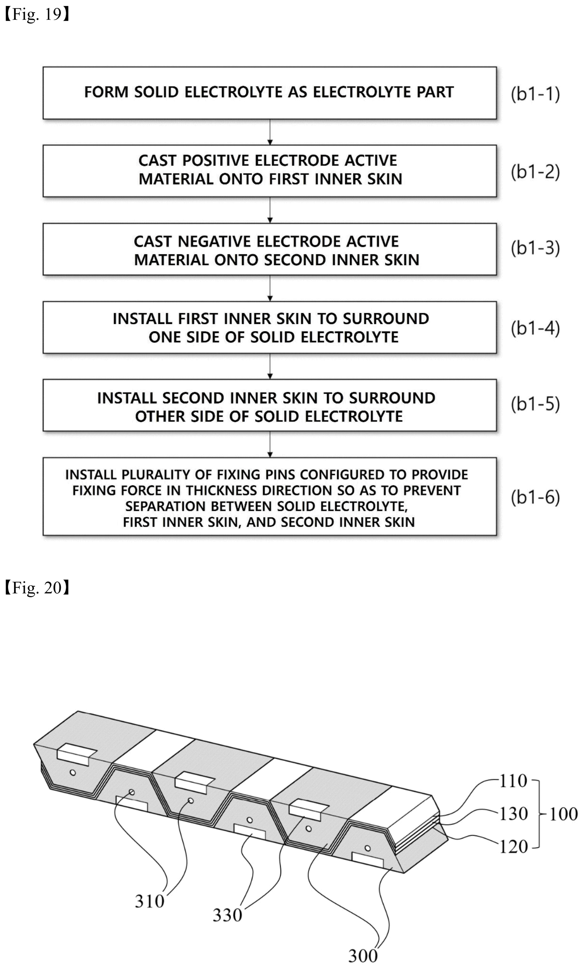

FIG. 19 is a diagram illustrating detailed operations of the operation (b1) in the manufacturing method of a battery including the active pressurization unit 300 according to the second embodiment of the present invention.

As shown in FIG. 19, in the present embodiment, the operation (b1) is an operation of fabricating the core 100 by electrically connecting the positive electrode and the negative electrode to the electrolyte part 130, and may include an operation (b1-1), an operation (b1-2), an operation (b1-3), an operation (b1-4), an operation (b1-5), and an operation (b1-6).

The operation (b1) is a process of forming a basic structure for simultaneously securing electrochemical performance and mechanical stability of the battery including the active pressurization unit 300, and, unlike the structural pressurization unit 200 of the first embodiment, may form a structure of the core 100 in consideration of the operative connection with the active pressurization unit 300 to be installed in a subsequent operation.

In the operation (b1-1), a solid electrolyte may be formed as the electrolyte part 130. In the present embodiment, the solid electrolyte may be classified, in the same manner as in the first embodiment, into a ceramic-based electrolyte, a sulfide-based electrolyte, an oxide-based electrolyte, a polymer-based electrolyte, and the like, each of which may exhibit different ionic conductivity, mechanical strength, thermal stability, and electrochemical stability.

In addition, in the operation (b1-1), an SMP having a shape memory property may be incorporated in the solid electrolyte, thereby enabling the electrolyte part 130 itself to perform a smart electrolyte function of automatically changing its characteristics in response to temperature changes.

In the present embodiment, the solid electrolyte including an SMP may enable more precise expansion control through cooperative action with the expansion detection unit 330 and the active pressurization unit 300 to be installed in subsequent operations.

The SMP may be implemented in various forms such as a polyurethane-based SMP, an epoxy-based SMP, and a polystyrene-based SMP, each of which may exhibit different transition temperatures and shape recovery characteristics.

Such an SMP may respond to temperature changes occurring during charging and discharging processes of the battery to simultaneously adjust mechanical properties and ionic conductivity of the electrolyte part 130, and may perform more precise pressurization control through operative connection with control signals of the active pressurization unit 300.

In particular, the shape memory polymer electrolyte may be manufactured based on a porous shape memory polymer, and such a porous structure may be actively controlled by external factors such as temperature, an electric field, or mechanical stress. Changes in porosity may simultaneously alter ionic conductivity and mechanical properties by controlling ion transport paths and pore size distribution within the electrolyte.

Specifically, when porosity increases, effective paths for ion transport may be expanded so that ionic conductivity may be improved, while conversely, when porosity decreases, mechanical rigidity may be increased so that expansion suppression effects may be enhanced.

Through such a porosity control mechanism, the shape memory polymer electrolyte may dynamically adjust an optimal performance balance point according to operating conditions of the battery, and may simultaneously optimize electrochemical performance and mechanical stability of the electrolyte part 130 through cooperative control with the active pressurization unit 300.

In addition, the solid electrolyte utilizing an SMP as a matrix may establish a smart response system. Such a system may support both passive control and active control to maximize safety and performance of the battery.

Specifically, in a passive control system, temperature change patterns occurring during a charging process may be previously measured and analyzed, and the shape memory polymer may be programmed accordingly.

For example, a transition temperature and a porosity variation profile of the shape memory polymer may be set according to a temperature rise curve during normal charging so that a charging rate is automatically optimized. Through this, even without separate external control, the battery itself may adjust the charging rate, prevent overheating, and perform safe charging.

In addition, in an active control system, the expansion detection unit 330, a temperature sensor, and a BMS may be operatively connected to each other to monitor a state of the battery in real time and determine thermal runaway or other abnormal situations. When an abnormal situation is detected, the pressurization control unit 320 may provide active thermal stimulation to the shape memory polymer, thereby enabling immediate response.

For example, when an initial stage of thermal runaway is detected, a specific temperature may be applied to the shape memory polymer through the heat generation unit 310 to rapidly decrease porosity and block ion pathways, thereby suppressing electrochemical reactions. In addition, in overcharging or overdischarging situations, porosity of the shape memory polymer may be adjusted to limit ionic conductivity, thereby switching the battery into a protection mode.

In the operation (b1-2), a positive electrode active material may be cast onto the first inner skin 110. The first inner skin 110 may include, in the same manner as the first embodiment, carbon fiber-reinforced plastic (CFRP), glass fiber-reinforced plastic (GFRP), metal composites, and the like, and may be designed in consideration of electrical connection with the active pressurization unit 300.

In the present embodiment, since the expansion detection unit 330 is installed in a subsequent operation, compatibility with a fiber-type sensor or a temperature sensor of the expansion detection unit 330 may be considered when selecting the structure and material of the first inner skin 110.

The positive electrode active material may include lithium cobalt oxide (LiCoO₂), lithium iron phosphate (LiFePO₄), lithium manganese oxide (LiMn₂O₄), lithium nickel cobalt manganese oxide (NCM), lithium nickel cobalt aluminum oxide (NCA), and the like.

In the casting process, conductive materials, binders, solvents, and the like may be used together with the positive electrode active material, and such components may use the same materials as those in the first embodiment.

However, in the present embodiment, in consideration of thermal interaction with the heat generation unit 310 of the active pressurization unit 300, selection of materials having excellent thermal stability may be preferred.

In the operation (b1-3), a negative electrode active material may be cast onto the second inner skin 120. The second inner skin 120 may use the same materials as the first inner skin 110, and structural design in consideration of system integration with the active pressurization unit 300 may be applied.

The negative electrode active material may include graphite, hard carbon, silicon, silicon oxide, lithium metal, lithium titanate, and the like, and each negative electrode active material may exhibit different capacity and cycle characteristics.

In the present embodiment, since precise pressurization control is enabled by the active pressurization unit 300, it may be advantageous to use a silicon-based negative electrode active material that undergoes a large volume change. The active pressurization unit 300 may adaptively respond to expansion of the silicon-based negative electrode based on real-time detection information from the expansion detection unit 330, thereby simultaneously achieving both high capacity and stable cycle characteristics.

The operation (b1-4) is an operation of installing the first inner skin 110 to surround one side of the solid electrolyte part 130. The operation (b1-4) may basically employ the same installation method as in the first embodiment, but additional considerations for operative connection with the active pressurization unit 300 may be applied.

For interfacial contact optimization between the first inner skin 110 and the solid electrolyte part 130, surface treatment techniques, the use of adhesives, and pressing processes may be applied, and such processes may affect detection accuracy of the expansion detection unit 330 to be installed in a subsequent operation, and thus precise control may be performed.

The operation (b1-5) is an operation of installing the second inner skin 120 to surround the other side of the solid electrolyte part 130. The operation (b1-5) may be performed symmetrically to the operation of installing the first inner skin 110, and the first inner skin 110 and the second inner skin 120 may be installed to support the solid electrolyte part 130 uniformly at both sides.

In the present embodiment, since the pressurization force is transmitted to the solid electrolyte part 130 through the first inner skin 110 and the second inner skin 120 in response to the control signal of the active pressurization unit 300, symmetry and contact uniformity between the two inner skins may directly affect system performance.

In the operation (b1-6), a plurality of fixing pins configured to provide fixing force in a thickness direction so as to prevent separation between the solid electrolyte part 130, the first inner skin 110, and the second inner skin 120 may be installed.

In the present embodiment, the fixing pins may be implemented with the same materials and shapes as in the first embodiment, but may be designed to respond to variable pressurization force provided by the active pressurization unit 300. The materials of the fixing pins may include carbon fibers, metal wires, ceramic pins, polymer pins, and the like, each of which may exhibit different mechanical properties and electrochemical stability.

In addition, in the present embodiment, the arrangement and the fixing force of the fixing pins may be optimized to respond to variations in dynamic pressurization force provided by the active pressurization unit 300. Specifically, the fixing pins may be arranged to prevent stress concentration and maintain structural stability in consideration of a pressurization force distribution varying according to the detection signals from the expansion detection unit 330.

In addition, the fixing pins may be implemented in various shapes such as straight, spiral, and hook types, and an optimal form may be selected in consideration of the characteristics of the active system.

In the present embodiment, the operation (b1) may form the core 100 in a semi-cured state, and may be performed with the same purpose and method as in the first embodiment.

The semi-cured state may facilitate forming work in subsequent processes and improve the precision of a final shape, and in particular, may provide a basis for precise installation of the active pressurization unit 300 and the expansion detection unit 330.

A degree of semi-curing may be controlled by adjusting an amount of curing agent, curing temperature, curing time, and the like, and may be optimized in consideration of installation requirements of the active system.

Each of the detailed processes of the operation (b1) may be a factor in determining electrochemical performance and mechanical stability of the battery including the active pressurization unit 300, and optimal performance may be secured through precise control and quality management of each process.

In addition, the core 100 formed in the operation (b1) may serve as a base structure enabling the expansion detection unit 330 and the active pressurization unit 300 to effectively function in subsequent operations.

Since the manner of performing the detailed processes of the operation (b1) is similar to that of the first embodiment, illustration thereof will be omitted.

FIG. 20 is a view illustrating a state of performing the processes of the operation (b2) and the operation (b3) in the method of manufacturing a battery including the active pressurization unit 300 according to the second embodiment of the present invention.

As shown in FIG. 20, in the present embodiment, the operation (b2) is an operation of installing the expansion detection unit 330 inside or outside the battery to detect an expansion state of the core 100, and is a process of configuring a system so that physical changes in the electrolyte part 130 are quantitatively measured, converted into electrical signals, and transmitted to the pressurization control unit 320.

At this time, the expansion detection unit 330 may be implemented based on various sensor technologies such as strain sensors, pressure sensors, temperature sensors, and displacement sensors, which may be disposed in a distributed manner at different positions of the electrolyte part 130 to individually detect expansion states of the respective portions.

When a fiber-type sensor is installed as the strain sensor, a degree of expansion may be calculated in real time by measuring resistance changes according to deformation of the electrolyte part 130. Such a fiber-type sensor has excellent flexibility and a thin structure, and thus may be easily embedded inside the battery, and the fiber-type sensor may measure a degree of the expansion of the core 100 in real time through resistance changes generated upon deformation of the electrolyte part 130.

When a temperature sensor is installed, an expansion state may be indirectly estimated by measuring changes in temperature of the core 100, and the temperature sensor may be implemented as a thermocouple, a thermistor, an infrared sensor, or the like.

In addition, the expansion detection unit 330 may be configured by combining a plurality of sensors, thereby improving measurement accuracy and providing a backup function against sensor errors.

In the operation (b3), the active pressurization unit 300 whose characteristics are changed by a control signal generated based on a detection signal of the expansion detection unit 330 is installed to be in contact with the core 100.

The active pressurization unit 300 may actively respond under external control and may variably provide an appropriate level of pressurization force according to an expansion state of the core 100.

In the present embodiment, the active pressurization unit 300 includes a shape memory material, and the heat generation unit 310, which provides thermal energy in response to a control signal, may be embedded in the shape memory material.

The heat generation unit 310 may be formed as a conductive wire that converts electrical energy into thermal energy, and may provide a required temperature to the shape memory material by utilizing the principle of Joule heating.

The heat generation unit 310 may be disposed in a distributed manner inside the shape memory material to form a uniform temperature distribution, and precise temperature control may be enabled by adjusting the magnitude and duration of the control signal.

That is, when a control signal is transmitted from the pressurization control unit 320 to be described later, the heat generation unit 310 allows current to flow according to the corresponding signal to generate Joule heating, whereby the temperature of the shape memory material is increased to induce a pre-programmed shape change.

The shape change of the shape memory material is transmitted as a pressurization force to the electrolyte part 130, thereby suppressing expansion of the core 100.

The shape memory material may be implemented in various forms such as a polyurethane-based SMP, an epoxy-based SMP, and a polystyrene-based SMP, each of which may exhibit different transition temperatures and shape recovery characteristics.

Thermal energy provided by the heat generation unit 310 may be controlled to an appropriate level in consideration of a transition temperature of the shape memory material, thereby enabling precise adjustment of pressurization force.

However, unlike the present embodiment, the active pressurization unit 300 may include not only the shape memory material but also an elastic body, and such an elastic body may provide a reaction force by being compressed against expansion of the core 100 in response to a control signal.

The elastic body may include silicon, rubber, or elastic polymers, and the like, and may further include an elastic module that provides reaction force through mechanical deformation upon compression.

Such an elastic module may be implemented in forms such as a spring, a bellows, or a diaphragm. However, the elastic module is not limited to such forms and may be implemented in various other forms.

In addition, the active pressurization unit 300 may further include an electroactive polymer, and such an electroactive polymer may have a characteristic of changing its size or shape upon application of an electric field.

The electroactive polymer may include dielectric elastomers, ionic polymer-metal composites, conductive polymers, and the like, and a deformation amount and pressurization force may be precisely controlled by adjusting the magnitude and direction of an applied voltage.

Since the electroactive polymer may be immediately deformed upon application of a voltage, the electroactive polymer may exhibit a fast response characteristic, thereby promptly responding to rapid expansion of the electrolyte part 130.

The expansion detection unit 330 and the active pressurization unit 300, which are installed through the operations (b2) and (b3), may be operatively connected to each other in real time to actively suppress expansion of the core 100.

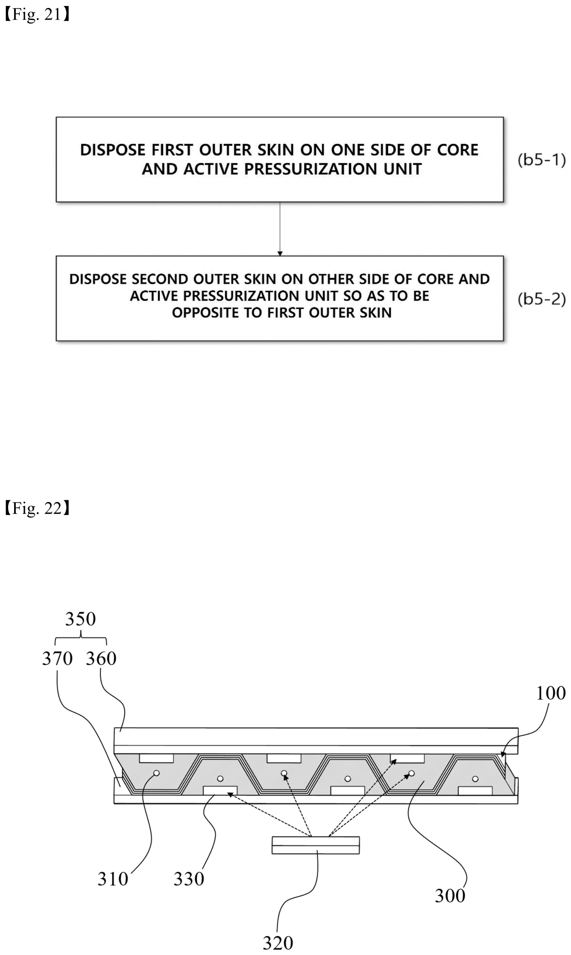

FIG. 21 is a diagram illustrating detailed operations of the operation (b5) in the manufacturing method of a battery including the active pressurization unit 300 according to the second embodiment of the present invention.

As shown in FIG. 21, in the present embodiment, the operation (b5) is an operation of installing the rigidity reinforcing member 350 on outer sides of the core 100 and the active pressurization unit 300, and is a process of securing overall structural completeness of the battery.

In the present embodiment, the operation (b5) may include an operation (b5-1) of disposing the first outer skin 360 on one side of the core 100 and the active pressurization unit 300, and an operation (b5-2) of disposing the second outer skin 370 on the other side of the core 100 and the active pressurization unit 300 so as to be opposite to the first outer skin 360.

The rigidity reinforcing member 350 may be formed of various materials such as carbon fiber-reinforced plastic (CFRP), glass fiber-reinforced plastic (GFRP), and metal composites, each of which may exhibit different mechanical properties and weight characteristics.

The CFRP may provide high rigidity and lightweight, and the GFRP may be relatively economical while providing appropriate rigidity. The metal composites may provide excellent electrical conductivity and thermal conductivity, and may be easily processed into complex shapes.

However, the rigidity reinforcing member 350 is not limited to such forms and may be implemented in various other forms.

In the present embodiment, the first outer skin 360 and the second outer skin 370 may be stacked in a thickness direction of the electrolyte part 130 and may be disposed to surround outer sides of the core 100 and the active pressurization unit 300.

Such a thickness-direction stacking method may maximize a direct pressurization effect on the battery and may function to effectively suppress expansion of the core 100.

In the thickness-direction stacking method, the first outer skin 360 and the second outer skin 370 are disposed in a vertical direction of the electrolyte part 130 to directly transmit the compressive force, thereby achieving a synergistic effect together with the active pressurization unit 300.

In addition, in the thickness-direction stacking method, bonding strength between the first outer skin 360 and the second outer skin 370 may directly affect the performance of the battery, and thus an appropriate adhesive or mechanical coupling method may be applied.

When an adhesive is used, an electrochemically stable adhesive may be selected so as not to adversely affect the performance of the battery, and when a mechanical coupling method is used, fastening elements such as bolts, rivets, or clamps may be utilized.

In addition, in the thickness-direction stacking, the thickness and rigidity of the first outer skin 360 and the second outer skin 370 may be variables determining a pressurization effect, and thus an appropriate design may be performed according to a required pressurization force.

In the present embodiment, structural characteristics of the battery may be adjusted through such various stacking methods, and optimal performance may be achieved through a combination of the active pressurization unit 300 and the rigidity reinforcing member 350.

In addition, since the active pressurization unit 300 may adjust the pressurization force based on real-time detection information from the expansion detection unit 330, expansion suppression effect of the core 100 may be improved through cooperative action with the rigidity reinforcing member 350.

FIG. 22 is a view illustrating a state of performing the operation (b6) in the method of manufacturing a battery including the active pressurization unit 300 according to the second embodiment of the present invention.

As shown in FIG. 22, in the present embodiment, the operation (b6) is an operation of electrically connecting the pressurization control unit 320, which processes detection signals from the expansion detection unit 330 to generate control signals, to the expansion detection unit 330 and the active pressurization unit 300.

In the operation (b6), the system may be configured so that the pressurization control unit 320 analyzes detection signals received from the expansion detection unit 330, generates optimal control signals according to an expansion state of the core 100, and transmits the control signals to the active pressurization unit 300.

The pressurization control unit 320 may include a microprocessor, a digital signal processor, an analog circuit, and the like, and may serve as a hardware platform for real-time signal processing and control algorithm implementation.

The microprocessor may be implemented with various processor architectures such as an ARM Cortex-M series, an Intel x86 series, or a RISC-V architecture, each of which may exhibit different performance and power consumption characteristics.

The digital signal processor may be dedicated hardware for high-speed signal processing, and may perform functions such as digital conversion of analog signals received from the expansion detection unit 330, noise filtering, signal analysis, and the like.

The analog circuit may perform basic signal processing functions such as amplification of sensor signals, analog-to-digital conversion, and provision of power.

The pressurization control unit 320 may apply various control algorithms, such as proportional-integral-derivative (PID) control, fuzzy control, neural network control, and adaptive control.

In the PID control, a difference between a degree of expansion measured by the expansion detection unit 330 and a target value may be decomposed into proportional, integral, and derivative terms to generate a control signal, and control performance may be optimized by adjusting coefficients of each term.

The fuzzy control may perform control based on linguistic rules in consideration of uncertainty and nonlinearity of an expansion state of the core 100, and experiences and knowledge of experts may be reflected in the control rules.

The neural network control may learn complex relationships between expansion patterns and optimal pressurization forces through machine learning, and may perform adaptive control based thereon.

The adaptive control may adjust control parameters in real time in response to changes in system characteristics caused by battery aging or environmental variations.

In the present embodiment, during electrical connection, wiring and connectors for signal transmission between the expansion detection unit 330, the pressurization control unit 320, and the active pressurization unit 300 may be included.

The wiring may use shielded cables to ensure accuracy and stability of signals, and a design to address electromagnetic interference (EMI) and electromagnetic compatibility (EMC) issues may be applied.

The shielding treatment may protect signal lines from external electromagnetic fields to prevent noise inflow, and may particularly provide a shielding effect against high-frequency noise.

The noise filtering may be implemented by combining analog filters and digital filters, and only desired frequency-band signals may be extracted through low-pass filters, high-pass filters, band-pass filters, or the like.

The signal amplification may allow weak sensor signals to be amplified to an appropriate level for processing by subsequent circuits, and operational amplifiers, instrumentation amplifiers, or the like may be used.

The connectors may be designed with waterproof, dustproof, and vibration-resistant characteristics, and may satisfy an appropriate protection rating (ingress protection (IP) rating) depending on the operating environment of the battery. In addition, surface treatments such as gold plating or nickel plating may be applied to the connectors so as to minimize contact resistance and maintain stable electrical connection even during long-term use.

Routing of the wiring may be designed to minimize signal interference and distribute mechanical stress, and a protection structure may be applied to prevent wiring damage caused by expansion or vibration of the battery.

The pressurization control unit 320 may quantitatively evaluate an expansion state of the core 100 by analyzing detection signals received from the expansion detection unit 330 in real time. In such an analysis process, preprocessing operations such as validation of sensor data reliability, outlier removal, and signal correction may be performed.

The validation of sensor data reliability may enable detection of sensor failures or malfunctions by cross-comparing data received from the plurality of sensors, and the outlier removal may enable identification and removal of abnormal measurement values through statistical methods or machine learning techniques.

The signal correction may compensate for measurement errors caused by nonlinearity, temperature drift, or aging of the sensors, and may be implemented through a calibration database or correction algorithms.

The intensity and timing of the control signal may be precisely adjusted in consideration of expansion characteristics of the core 100 and dynamic characteristics of the active pressurization unit 300. Since the expansion characteristics of the core 100 may vary depending on temperature, charging and discharging states, the type of electrolyte, and the like, modeling that comprehensively takes such factors into account may be performed.

Dynamic characteristics of the active pressurization unit 300 may include response time of the shape memory material, heating characteristics of the heat generation unit 310, deformation characteristics of the elastic body, and the like, and based on these, optimal control signal profiles may be generated.

Meanwhile, the pressurization control unit 320 may be operatively connected to a BMS to receive various pieces of information such as the temperature, voltage, and charging and discharging states of the battery, and may reflect these in the generation of control signals.

The information provided from the BMS may be indicators representing an overall state of the battery, and may be directly related to expansion control.

For example, when the temperature of the battery increases, the expansion of the core 100 is more likely to increase, and thus preemptive pressurization control may be performed by detecting the temperature in advance.

In addition, the charging and discharging states are related to variations in ion concentration of the electrolyte part 130, which may affect the degree of expansion, while voltage information serves as an indicator of the charging state and internal resistance of the battery, thereby indirectly indicating an electrochemical state of the electrolyte part 130. Such operative connection may enable integrated control considering an overall state of the battery, thereby improving the safety and lifespan of the battery.

The integrated control may not only suppress expansion, but may also mean optimized control comprehensively considering the performance, safety, and lifespan of the battery. For example, excessive pressurization may cause damage to the electrolyte part 130, and thus an appropriate level of pressurization force may be maintained based on the information from the BMS. In addition, an optimal pressurization strategy may be established from a long-term perspective by being operatively connected to a lifespan prediction model of the battery.

By performing the operation (b6) as described above, the expansion detection unit 330, the pressurization control unit 320, and the active pressurization unit 300 may be operatively connected to each other in real time to form an active pressurization system capable of suppressing expansion of the core 100.

Unlike conventional passive pressurization methods, the active system of the present embodiment may actively respond to state changes of the battery and may provide adaptability to various operating conditions and environmental changes.

Meanwhile, the operation (b7) is an operation of operatively connecting the pressurization control unit 320 to a BMS, and may represent a process of performing integrated control in consideration of overall state information of the battery.

In the operation (b7), the system may be configured so that the pressurization control unit 320 performs real-time data exchange with the BMS through a communication interface and reflects comprehensive state information of the battery into control logic.

The pressurization control unit 320 may receive various pieces of information such as temperature, charging and discharging states, and voltage of the electrolyte part 130 from the BMS, and may reflect the information in generation of control signals to perform precise and reliable pressurization control.

Temperature information is directly related to thermal expansion of the electrolyte part 130, and thus, the expansion prediction model may be constructed by analyzing temperature change patterns.

Charging and discharging state information is related to ion concentration variation inside the electrolyte part 130, which may affect volume change in the core 100.

Voltage information is an indicator representing internal impedance and an electrochemical state of the battery, thereby indirectly identifying physical state variation of the electrolyte part 130.

The operative connection with the BMS may be implemented through various communication protocols such as controller area network (CAN), local interconnect network (LIN), serial peripheral interface (SPI), or inter-integrated circuit (I2C).

CAN communication is a protocol widely used in automotive and industrial applications, and may provide high reliability and noise immunity, and LIN communication may provide cost-efficient communication with a relatively simple structure and may be suitable for transmission of low-speed control signals.

SPI communication may enable high-speed data transmission and may be applicable to control systems requiring real-time performance, and I2C communication may support communication among multiple devices with a small number of wiring lines, thereby reducing complexity of the system.

Such operative connection with the BMS may comprehensively manage the safety, lifespan, and performance of the battery, and may provide a basis for actively responding to changes in operating conditions of the battery.

Safety management may include functions of detecting and preventing risk situations such as overcharge, overdischarge, and overtemperature in advance, and the pressurization control unit 320 may perform protective pressurization control based on such safety information.

Lifespan management may include a function of monitoring an aging state of the battery and maintaining optimal operating conditions for extending lifespan, and the pressurization control unit 320 may adjust a pressurization strategy according to the degree of aging of the battery.

In addition, performance management may include a function of optimizing the capacity, output, efficiency, and the like of the battery, and the pressurization control unit 320 may provide appropriate pressurization force for improving performance.

By performing the operation (b7), the pressurization control unit 320 may optimize control signals from the active pressurization unit 300 through real-time data exchange with the BMS, thereby supporting suppression of expansion of the core 100 and stable operation of the battery.

Real-time data exchange may enable rapid response to abrupt changes in a battery state, and predictive control algorithms may predict future state changes and take preemptive control actions. In addition, the operative connection with the BMS may improve overall energy efficiency of the system and may enable integrated management at a battery pack level.

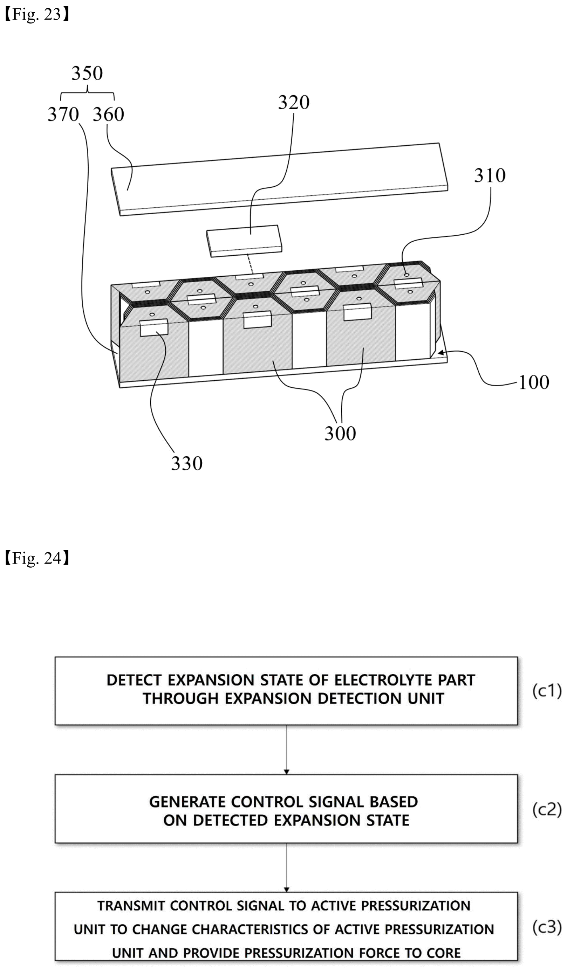

Meanwhile, FIG. 23 is a view additionally illustrating a method applicable to the process of the operation (b5) in the method of manufacturing a battery including the active pressurization unit 300 according to the second embodiment of the present invention.

Similarly to the first embodiment, in the present embodiment as well, as another applicable method of the operation (b5), the first outer skin 360 and the second outer skin 370 may be stacked in a width direction of the electrolyte part 130 and may be disposed to surround outer sides of the core 100 and the active pressurization unit 300.

Such a width-direction stacking method may adjust overall rigidity distribution of the battery and may improve resistance to torsion or bending of the battery.

In addition, in the width-direction stacking, the first outer skin 360 and the second outer skin 370 may be disposed in a lateral direction of the electrolyte part 130 to function to secure overall structural rigidity.

Accordingly, an appropriate stacking direction may be selected depending on an operating environment and required performance of the battery, and a hybrid structure combining the two methods may also be applied as necessary.

Specific embodiments of the battery including the active pressurization unit and the method of manufacturing the same have been described above, and hereinafter, a control method for preventing expansion of the battery including such an active pressurization unit will be described.

FIG. 24 is a diagram illustrating each operation of a control method for preventing expansion of the battery including the active pressurization unit 300 according to the second embodiment of the present invention.

As shown in FIG. 24, in the present embodiment, the control method for preventing expansion of the battery will be described based on the above-described configuration of the second embodiment.

That is, the battery according to the second embodiment of the present invention includes the core 100 including the positive electrode, the negative electrode, and the electrolyte part 130 electrically connecting the positive electrode and the negative electrode, the expansion detection unit 330 configured to detect an expansion state of the core 100, and the active pressurization unit 300 that changes its characteristics by a control signal generated based on a detection signal of the expansion detection unit 330 and provides a pressurization force to the core 100.

In addition, the control method for preventing expansion of the battery according to the present embodiment may include an operation (c1) of detecting an expansion state of the core 100 through the expansion detection unit 330, an operation (c2) of generating a control signal based on the detected expansion state, and an operation (c3) of transmitting the control signal to the active pressurization unit 300 so as to change the characteristics of the active pressurization unit 300 and provide a pressurization force to the core 100.

The control method for preventing expansion of the battery according to the present embodiment may implement a system capable of suppressing expansion of the battery by intelligently detecting an expansion state of the core 100 that changes in real time and controlling the active pressurization unit 300 in response thereto.

In addition, unlike passive pressurization methods, the control method for preventing expansion of the battery according to the present embodiment may actively respond to changes in the state of the battery and may provide adaptability to various operating conditions and environmental changes. Further, precise pressurization control according to an expansion state of the battery may be enabled, thereby achieving extension of lifespan and improvement of performance of the battery.

In the operation (c1), an expansion state of the core 100 may be detected through the expansion detection unit 330.

The expansion detection unit 330 may include a strain sensor for detecting deformation caused by expansion of the core 100, and, as described above, such a strain sensor may be a fiber-type sensor that measures a degree of expansion of the core 100 in real time through resistance changes generated upon deformation of the electrolyte part 130.

The fiber-type sensor utilizes a characteristic in which a resistance value of an internal conductor varies according to physical deformation of the electrolyte part 130, and such resistance changes may have a linear or nonlinear relationship with a degree of expansion.

In the operation (c1), a degree of expansion of the core 100 may be calculated in real time by measuring resistance changes of the strain sensor.

The measurement of resistance changes may be performed through various electrical measurement methods such as a Wheatstone bridge, potential difference measurement, or impedance analysis, and the measured resistance values may be converted into digital signals to be used as data for subsequent processing.

The resistance changes measured through a resistance-strain relationship may be converted into a physical deformation amount, and based on this, an accurate degree of expansion of the electrolyte part 130 may be calculated.

Alternatively, the expansion detection unit 330 may include a temperature sensor for measuring temperature of the electrolyte part 130, and in the operation (c1), a degree of expansion of the core 100 may be calculated in real time by measuring changes in temperature of the temperature sensor.

In addition, the temperature sensor may be implemented in various forms such as a thermocouple, a thermistor, a resistance temperature detector (RTD), or an infrared sensor.

In the case of the thermocouple, temperature may be detected by measuring a thermoelectromotive force generated at a junction of different metals, and in the case of the thermistor, temperature measurement may be enabled by utilizing resistance changes according to temperature.

In the case of the RTD, precise temperature measurement may be performed by utilizing a temperature coefficient of a metallic resistor such as platinum.

At this time, correlation between the temperature of the electrolyte part 130 and the expansion may be modeled by taking into account various factors such as a thermal expansion coefficient, volume variation caused by electrochemical reactions, and variation in ion mobility.

In the case of the solid electrolyte, lattice expansion and variation in ionic conductivity due to temperature rise may act in combination.

Such a temperature-expansion relationship may be established by combining experimental data and theoretical models, and accuracy may be improved through machine learning algorithms.

In the present embodiment, a plurality of expansion detection units 330 may be disposed in a distributed manner to correspond to a plurality of positions of the electrolyte part 130, and in the operation (c1), degrees of expansion of the respective portions of the electrolyte part 130 may be individually calculated through the expansion detection units 330.

The expansion detection units 330, which are disposed in a distributed manner, may precisely detect non-uniform expansion patterns occurring in different regions of the electrolyte part 130, thereby identifying local expansion phenomena or stress concentration regions.

Data collected from each expansion detection unit 330 may be utilized as mapping information representing an overall expansion distribution of the electrolyte part 130, and selective and differential pressurization control may be enabled based on the mapping information.

The data collected from the plurality of expansion detection units 330 may be processed in an integrated manner through sensor fusion technology, thereby compensating for measurement errors of individual sensors and improving overall measurement reliability.

The sensor fusion may be implemented through probabilistic methods such as Kalman filtering, particle filtering, or Bayesian inference, or through statistical methods such as weighted averaging or median filtering.

In addition, a fault-tolerant system may be constructed by identifying and excluding faulty sensors through cross-validation among the sensors.

In the operation (c2), a control signal may be generated based on the expansion state detected in the operation (c1).

In the operation (c2), the control signal may be generated when the detected expansion state of the electrolyte part 130 exceeds a preset threshold.

At this time, the threshold may be set in consideration of factors such as a safe operating range of the battery, performance requirements, and lifespan targets, and may be implemented as a single threshold or a multi-level threshold structure. In the case of the single threshold, simple on/off control may be applied, whereas in the case of the multi-level thresholds, differentiated control intensities may be applied for each level.

The setting of the threshold may vary depending on the type of battery, electrolyte characteristics, operating conditions, and the like, and adaptive threshold adjustment may enable response to battery aging or environmental variations.

For example, in the case of lithium-ion batteries, a certain degree of expansion is generally tolerable, whereas in the case of all-solid-state batteries, stricter thresholds may be set to maintain interfacial contact. In addition, under high-temperature environments, the threshold may be adjusted upward due to increased thermal expansion, while under low-temperature environments, the threshold may be adjusted downward in consideration of contraction of the electrolyte.

In addition, in the operation (c2), the intensity of the control signal may be adjusted in proportion to the degree of expansion of the core 100.

Such proportional control may be implemented by establishing a linear or nonlinear relationship between the degree of expansion and the control signal, thereby providing sufficient pressurization force while preventing damage to the electrolyte part 130 caused by excessive pressurization.

At this time, proportional coefficients may be determined in consideration of characteristics of the active pressurization unit 300, mechanical properties of the electrolyte part 130, structural rigidity of the battery, and the like.

Adjustment of the control signal intensity may be implemented through various modulation techniques such as pulse width modulation (PWM), amplitude modulation (AM), or frequency modulation (FM). In the case of the pulse width modulation, average power may be controlled by adjusting a duty cycle at a fixed frequency, and in the case of the amplitude modulation, the magnitude of the signal may be directly adjusted. In the case of the frequency modulation, dynamic response characteristics of the active pressurization unit 300 may be utilized to optimize control performance.

In the operation (c3), the control signal may be transmitted to the active pressurization unit 30 to change the characteristics of the active pressurization unit 300 and provide a pressurization force to the core 100.

As described above, in the present embodiment, the active pressurization unit 300 is exemplified as a shape memory material formed to change its shape in response to a change in temperature of the electrolyte part 130, and the heat generation unit 310 that provides thermal energy in response to the control signal may be embedded therein.

Accordingly, in the present embodiment, in the operation (c3), the control signal may be transmitted to the heat generation unit 310 embedded in the shape memory material to provide thermal energy to the shape memory material.

The shape memory material may be implemented in various forms such as a shape memory polymer (SMP), a shape memory alloy (SMA), or a shape memory ceramic (SMC). The SMP may be based on polyurethane, epoxy, polystyrene, or the like, and a shape change may occur near a glass transition temperature (Tg) or a melting point (Tm).

The SMA may be composed of alloys such as nickel-titanium (NiTi) and copper-zinc-aluminum (CuZnAl), and a shape change may occur through an austenite-martensite phase transformation.

The heat generation unit 310 may be formed as a conductive wire that converts electrical energy into thermal energy, and may provide a required temperature to the shape memory material by utilizing the principle of Joule heating.

The conductive wire may be made of high-resistance materials such as nichrome, tungsten, or tantalum, and an amount of heat generated may be adjusted in proportion to a resistance value and the square of a current. The arrangement of the conductive wire may be designed to form a uniform temperature distribution within the shape memory material and may be implemented in various patterns such as a spiral type, a zigzag type, or a matrix type.

The control signal may be transmitted to the heat generation unit 310 to adjust a temperature of the shape memory material, thereby inducing a shape change and providing a pressurization force to the core 100.

Temperature control may be performed through proportional control, integral control, derivative control, or PID control as a combination thereof, and precise temperature control may be enabled through feedback of a temperature sensor.

The degree of shape change may be expressed as a function of temperature and time, and may be determined according to characteristics of the shape memory material and a heat treatment history.

In addition, in another form different from the present embodiment, the active pressurization unit 300 may include an elastic body that provides a reaction force by being compressed against expansion of the core 100 in response to a control signal.

In such a case, in the operation (c3), the control signal may be transmitted to the elastic body to generate a reaction force in the elastic body. The elastic body may include silicon, rubber, elastic polymers, and the like, each of which may exhibit different elastic moduli, viscous coefficients, and temperature dependencies.

The silicone elastic body may maintain stable elastic properties over a wide temperature range and may exhibit excellent chemical stability and durability.

In the case of the rubber elastic body, elastic recovery may be possible even at high strain levels, and vibration absorption and shock mitigation effects may be provided.

In the case of the elastic polymers, desired elastic properties may be implemented through molecular structure design, and smart material characteristics may be imparted.

Alternatively, the elastic body may include an elastic module that provides a reaction force through mechanical deformation upon compression, and such an elastic module may be implemented in the form of a spring, a bellows, a diaphragm, or the like.

The spring may have linear or nonlinear load-displacement characteristics and may be implemented in various forms such as compression springs, tension springs, or torsion springs.

The bellows may flexibly respond to axial compression through their corrugated structure and provide variable reaction force depending on an amount of compression.

The diaphragm is a membrane-type structure that deforms in response to a pressure difference and may maintain a constant pressurization force through a restoring force.

At this time, adjustment of the reaction force of the elastic body by the control signal may be implemented through active control mechanisms such as an electroactive polymer (EAP), a piezoelectric actuator, or an electromagnetic actuator.

The electroactive polymer may have a characteristic of changing a size or shape upon application of an electric field, and may include dielectric elastomers, ionic polymer-metal composites, conductive polymers, or the like.

The piezoelectric actuator may convert an electrical signal into mechanical deformation using a piezoelectric effect, and may have high precision and fast response characteristics.

The electromagnetic actuator may generate mechanical motion using electromagnetic force, and may provide large force and displacement.

Meanwhile, the operations (c2) and (c3) described above may be performed by the pressurization control unit 320, which processes detection signals from the expansion detection unit 330 to generate control signals.

The pressurization control unit 320 may be implemented based on hardware platforms such as a microprocessor, a digital signal processor (DSP), or a field-programmable gate array (FPGA), and control algorithms may be executed through a real-time operating system (RTOS) or embedded software.

The pressurization control unit 320 may apply various control algorithms such as proportional-integral-derivative (PID) control, fuzzy control, neural network control, adaptive control, and model predictive control (MPC).

The PID control generates a control signal by integrating current, past, and predicted future values of an error, and control performance may be optimized by adjusting coefficients of each term.

The fuzzy control may cope with uncertainty and nonlinearity by expressing expert experience and knowledge in linguistic rules.

The neural network control may learn dynamic characteristics of a complex system through machine learning and perform adaptive control.

The adaptive control may adjust parameters of a controller in real time in response to parameter variations or disturbances of the system, and may effectively respond to characteristic changes due to battery aging or environmental variations.

The MPC may generate control signals by predicting future behavior of the system based on a mathematical model and solving an optimization problem, and has an advantage of explicitly considering constraints.

In addition, in the operations (c2) and (c3), the pressurization control unit 320 may generate control signals through operative connection with a BMS.

The operative connection with the BMS may be implemented through various communication protocols such as controller area network (CAN), local interconnect network (LIN), serial peripheral interface (SPI), inter-integrated circuit (I2C), or Ethernet.

Each communication protocol may have different data transmission speeds, reliability, and noise immunity, and an appropriate protocol may be selected according to system requirements.

In addition, in the operation (c2), the pressurization control unit 320 may receive at least one piece of information among a temperature of the electrolyte part 130, charging and discharging states, and a voltage from the BMS, and may reflect the information in generation of control signals.

Temperature information is directly related to thermal expansion of the electrolyte part 130, and thus may be utilized as an input variable of the expansion prediction model.

Charging and discharging state information is related to ion concentration variation inside the electrolyte part 130, which may affect electrochemical expansion.

Voltage information is an indicator representing internal impedance and an electrochemical state of the battery, thereby indirectly identifying physical state changes in the electrolyte part 130.

In addition, additional information received from the BMS may include state of charge (SOC), state of health (SOH), state of function (SOF), current, internal resistance, and power.

The SOC represents a remaining capacity of the battery, which may be related to ion distribution of the electrolyte part 130.

The SOH represents a degree of aging of the battery, which may be associated with changes in mechanical properties of the electrolyte part 130.

The SOF represents instantaneous output capability of the battery, which may be related to ionic conductivity of the electrolyte part 130.

As described above, the control method of the battery according to the second embodiment of the present invention implements an active pressurization system capable of actively suppressing expansion in response to real-time changes in the state of the electrolyte part 130, and adaptively responding to various operating conditions and environmental changes. Through such a control method, performance degradation due to expansion of the battery may be prevented, an increase in interfacial contact resistance may be suppressed, and mechanical stability may be secured.

In addition, while preventing damage to the electrolyte part 130 caused by excessive pressurization, sufficient pressurization force may be provided to maximize expansion suppression effects, thereby achieving lifespan extension and performance improvement of the battery.

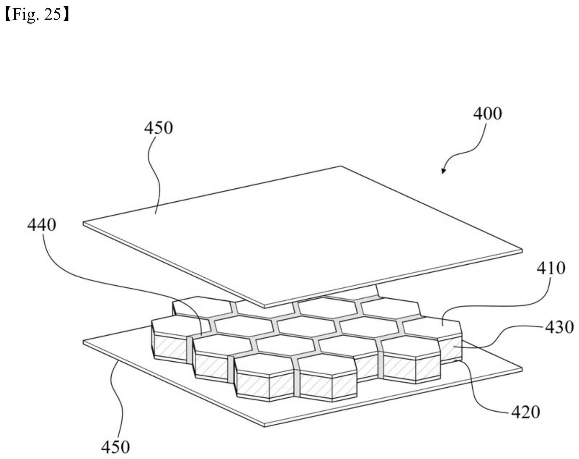

FIG. 25 is a view illustrating a honeycomb structure applicable to the core of the battery according to all embodiments of the present invention.

As shown in FIG. 25, a core 400 applied to the battery according to the present invention may itself be configured as a honeycomb structure. In addition, the honeycomb-structured core 400 may be applied without limitation not only to all the embodiments described above but also to various modifications of the present invention that are not described in the present specification.

Specifically, the core 400 having a honeycomb structure may include a plurality of unit cells, each of which may function as an independent electrochemical cell including a positive electrode 410, a negative electrode 420, and an electrolyte part 430. Such unit cells may simultaneously secure both efficient space utilization and structural stability through hexagonal geometric shapes.

In addition, partition walls 440 may be formed between the plurality of unit cells to physically divide and electrically insulate each unit cell. The partition walls 440 may be designed to maintain the independence of each unit cell while ensuring structural integrity of the entire core 400.

In addition, core skins 450 may be formed outer sides the plurality of unit cells and the partition walls 440 to provide structural protection and electrochemical stability of the entire core 400. The core skins 450 may protect the plurality of unit cells inside the core 400 from external environments and may enhance mechanical rigidity of the entire core 400.

In this case, the partition walls 440 may be composed of various materials such as aramid or ceramic, which may be selected to provide sufficient mechanical strength and insulation while not affecting electrochemical reactions of each unit cell.

The core skins 450 may be composed of polymer materials, composite materials, or metal thin films, and may function to protect the entire core 400 while enhancing mechanical stability of the honeycomb structure.

Such a honeycomb structure has characteristics of achieving maximum rigidity and space efficiency with a minimum amount of material. In addition, a repetitive hexagonal pattern may provide uniform stress distribution against external loads, and expansion forces generated in each unit cell may be effectively dispersed through adjacent cells and the partition walls 440.

However, the honeycomb structure of the core 400 is presented as one example, and various shapes other than the hexagonal partition structure may of course be applied.

A battery including a pressurization structure, and a manufacturing method and control method thereof according to the present invention for solving the above-described problems, have an advantage in that, by providing a pressurization force to a core by a mechanical support force, both improved structural performance and electrochemical performance of the battery can be simultaneously secured, while effectively suppressing a swelling phenomenon of the battery to prevent degradation of electrochemical performance of the battery, improve Coulombic efficiency, and significantly extend cycle life.

In particular, the present invention can provide an optimized pressurization effect tailored to characteristics of respective battery types. Specifically, when applied to lithium-ion batteries, the present invention can suppress expansion through pressurization to secure structural stability of active materials, thereby preventing capacity reduction and significantly extending cycle life. When applied to lithium metal batteries, the present invention can provide a uniform pressurization force to lithium metal negative electrodes to suppress dendrite formation and control the morphology of lithium deposition, thereby improving Coulombic efficiency and ensuring safety. When applied to all-solid-state batteries, the present invention can continuously maintain interfacial contact between solid electrolytes and electrodes, thereby minimizing interfacial resistance, enhancing ionic conductivity, and thus maximizing electrochemical performance.

Further, in the present invention, a structural pressurization unit is designed to be integrated with a battery core, thereby eliminating the need for a separate external pressurization device or a complex mechanical system, while enabling precise control through an expansion detection unit and an active pressurization unit when necessary, and thus the overall weight and volume of the battery system can be significantly reduced, while structural rigidity and control precision can be simultaneously secured. Accordingly, excellent performance can be exhibited particularly in application fields such as walking robots, drones, and electric aircraft, in which lightweight design and precise control are critical.

In addition, the present invention can remarkably improve the mechanical properties and structural stability of a battery by inserting a honeycomb core or insulating cores with various lattice structures into an electrolyte part. In particular, the honeycomb-structured insulating core provides high compressive strength and shear strength in an in-plane direction while maintaining appropriate flexibility in a thickness direction, thereby securing ionic conduction paths within an electrolyte part and simultaneously performing a mechanical support function, so that the battery of the present invention can itself serve as a structural battery with the advantage that both overall system weight reduction and maximization of structural efficiency can be simultaneously achieved in various application fields.

In addition, the present invention has an advantage in that, in addition to a basic expansion suppression function through a structural pressurization unit, an expansion detection unit detects an expansion state of a battery in real time and an active pressurization unit adaptively adjusts a pressurization force in response thereto, thereby enabling active response to dynamic changes in expansion characteristics of the battery and various operating environments, and significantly improving system reliability and stability.

In addition, the present invention has an advantage in that, upon application of a structural pressurization unit, a mechanical support force is generated by utilizing structural changes in a core due to expansion, so that no additional power supply is required to achieve basic expansion suppression, and upon application of an active pressurization unit, precise control can be performed only when necessary, thereby maximizing energy efficiency and significantly improving overall system reliability and stability.

Furthermore, the present invention provides versatility applicable not only to all-solid-state batteries but also to various types of batteries such as lithium-ion batteries, lithium metal batteries, lithium-sulfur batteries, and silicon-anode-based batteries, and allows selective utilization of structural or active expansion prevention functions suitable for the characteristics of each battery type, thereby overcoming limitations of conventional battery technologies and broadly contributing to improving the performance of next-generation energy storage systems.

Further, the present invention can greatly increase the degree of system integration compared with conventional approaches of separately designing a structure and a battery, simplify a manufacturing process, and significantly improve productivity and cost-effectiveness by enabling the battery itself to serve as a structural battery supporting structural loads while simultaneously providing both passive and active expansion suppression functions.

Effects of the present invention will not be limited to the above-mentioned effects and other unmentioned effects will be clearly understood by those skilled in the art from the following claims.

The exemplary embodiments of the present invention have been described as described above, and it will be clear to those skilled in the art that the present invention will be realized into a different specific form without departing from the spirit or scope of the present invention other than the above-described embodiments. Accordingly, the above-described embodiments should be considered in a descriptive sense only and not for purposes of limitation, and the present invention is not limited to the above description and may also be changed within the scope of the appended claims and all equivalents falling within the scope.

## Claims

1. A battery comprising:
a core including a positive electrode, a negative electrode, and an electrolyte part electrically connecting the positive electrode and the negative electrode; and
a structural pressurization unit configured to generate a pressurization force on the core by a mechanical support force.

2. The battery of claim 1, wherein the electrolyte part includes a solid electrolyte.

3. The battery of claim 2, wherein the solid electrolyte includes a shape memory polymer (SMP) having a shape memory property.

4. The battery of claim 2, wherein the core further includes:
a first inner skin configured to surround one side of the solid electrolyte, wherein a positive electrode active material is cast to form the positive electrode; and
a second inner skin disposed opposite to the first inner skin to surround the other side of the solid electrolyte, wherein a negative electrode active material is cast to from the negative electrode.

5. The battery of claim 4, wherein each of the first inner skin and the second inner skin includes one or more of carbon fiber-reinforced plastic (CFRP), glass fiber-reinforced plastic (GFRP), and metal composites.

6. The battery of claim 4, wherein each of the first inner skin and the second inner skin is formed in a shape in which a cross section in a width direction is curved so as to deform in a direction that prevents separation from the solid electrolyte.

7. The battery of claim 4, wherein the core further includes a plurality of fixing pins configured to provide a fixing force in a thickness direction so as to prevent separation between the solid electrolyte, the first inner skin, and the second inner skin.

8. The battery of claim 1, wherein the core is processed into a predetermined repetitive bending shape to form a mounting space in which the structural pressurization unit is provided.

9. The battery of claim 1, wherein the structural pressurization unit is a volume-expanding foam that provides a fixed pressurization force after expansion.

10. The battery of claim 9, wherein the volume-expanding foam includes one or more of a urethane foam, an epoxy foam, and a phenolic foam.

11. The battery of claim 1, wherein the structural pressurization unit includes a shape memory material configured to provide a pressurization force to the core as a shape thereof changes in response to a temperature rise of the electrolyte part.

12. The battery of claim 11, wherein the shape memory material is heat-treated such that an optimal pressurization force corresponding to each temperature section of the electrolyte part is precalculated and the shape memory material is deformable according to a change in temperature of the electrolyte part to adjust the pressurization force.

13. The battery of claim 1, wherein the structural pressurization unit includes an elastic body formed to have an elastic restoring force and configured to provide a reaction force by being compressively deformed due to expansion of the core.

14. The battery of claim 13, wherein the elastic body includes one or more of silicone, rubber, and an elastic polymer.

15. The battery of claim 13, wherein the elastic body includes an elastic module configured to provide a reaction force through mechanical deformation upon compression.
